# EUROPÄISCHE PATENTANMELDUNG

(11) **EP 4 648 459 A2**
(43) Veröffentlichungstag der Anmeldung: **12.11.2025**
(21) Anmeldenummer: 25201455.0
(22) Anmeldetag: 12.11.2020
(51) Int. Cl.: H04W 16/18

(54) **VERFAHREN ZUR FUNK-KANALZUWEISUNG IN EINEM ELEKTRONISCHEN ANZEIGE-SYSTEM**

(62) Teilanmeldung aus: 20811542.8
(71) Anmelder: VusionGroup GmbH, 8072 Fernitz-Mellach (AT)
(72) Erfinder: Rössl, Andreas, 8072 Fernitz-Mellach (AT)
(74) Vertreter: Schneider, Michael

(57) **Zusammenfassung**

Verfahren zur Funk-Kanalzuweisung in einem System (9) elektronischer Anzeigen (100 - 699), wobei das System (9) eine Datenverarbeitungseinrichtung (8), Kommunikationsstationen (1 - 6) und elektronische Anzeigen (100 - 699) aufweist und jede Kommunikationsstation (1 - 6) zur Nutzung eines durch die Datenverarbeitungseinrichtung (8) definierten Funkkanals (80 - 90) für eine Funkkommunikation mit ihr zugeordneten elektronischen Anzeigen (100 - 699) ausgebildet ist, wobei das Verfahren die folgenden Verfahrensschritte aufweist, nämlich: Definieren des zu nutzenden Funkkanals auf Grundlage von durch die Kommunikationsstation (1 - 6) an die Datenverarbeitungseinrichtung (8) übermittelter Funkkanal-Aktivität-Daten, welche eine erfasste Funk-Aktivität im jeweiligen Funkkanal (80 - 90) beschreiben, dadurch gegenzeichnet, dass die Übermittlung der Funkkanal-Aktivität-Daten durch die Kommunikationsstation (1 - 6) zu einem Zeitpunkt erfolgt, nachdem die jeweilige Kommunikationsstation (1 - 6) durch Nutzung eines Funkkanals einen erstmaligen Verbindungsaufbau mit zumindest einer der elektronischen Anzeigen (100 - 699) durchgeführt hat, wobei die Funkkanal-Aktivität-Daten eine erfasste Funk-Aktivität nach besagtem erstmaligem Verbindungsaufbau beschreiben.

## Beschreibung

### Technisches Feld

Die Erfindung betrifft ein Verfahren zur Funk-Kanalzuweisung in einem elektronischen Anzeige-System und ein elektronisches Anzeige-System, bei dem ein solches Verfahren verwendet wird bzw. das zur Verwendung eines solchen Verfahrens ausgebildet ist.

### Hintergrund

Ein Verfahren zur Funk-Kanalzuweisung in einem Electronic-Shelf-Label-System (kurz ESL-System) ist beispielsweise aus der KR20140014540A bekannt. Dort wird ein heterogenes Funksystem beschrieben, bei dem in dem ESL-System eine ZigBee-Funkkommunikation zur Anwendung kommt und im gleichen Frequenzband auch eine Wi-Fi-Funkkommunikation erfolgt. Dies kann zu Störungen im Funkverkehr, insbesondere im ESL-System, führen.

Das ESL-System weist eine Mehrzahl von Gateway-Units auf, die einerseits mit einer zentralen Management-Server-Unit verbunden sind und andererseits besagte ZigBee-Funkkommunikation mit jeweils einer Gruppe von Electronic-Shelf-Labels (kurz ESLs) abwickeln.

Zur Lösung des Problems besagter Störungen im Funkverkehr ist vorgesehen, dass jede Gateway-Unit eine Funkkanal-Nutzung-Information betreffend die Funkkanal-Nutzung eines bzw. mehrerer Kanäle wie auch eine Positionsinformation betreffend die Position der jeweiligen Gateway-Unit bereitstellt und an die Management-Server-Unit überträgt. Darauf aufbauend definiert die Management-Server-Unit für jede Gateway-Unit einen bevorzugten Funkkanal, der für den Verbindungsaufbau mit den ESLs zur Anwendung kommt. Damit wird sichergestellt, dass für die Funkverbindung zwischen der jeweiligen Gateway-Unit und den ESLs ein ZigBee-Funkkanal benutzt wird, der nicht zu einem benutzen WiFi-Funkkanal korrespondiert und für den die beste Empfangsempfindlichkeit vorliegt. Weiterhin wird sichergestellt, dass benachbarte Gateway-Units unterschiedliche ZigBee-Funkkanäle nutzen.

Bei dem bekannten Verfahren zur Funk-Kanalzuweisung hat es sich als nachteilig erwiesen, dass auf Veränderungen in dem ESL-System wie auch dem WiFi-System während des Betriebs des ESL-Systems nicht eingegangen werden kann. Zudem ist die vorgeschlagene Nutzung von GPS innerhalb von Gebäuden, wie Geschäftslokalen, in denen ESL-Systeme üblicherweise installiert sind, zwecks Bestimmung der Position der jeweiligen Gateway-Unit fragwürdig.

Die Erfindung hat sich daher die Aufgabe gestellt, ein verbessertes Verfahren zur Funk-Kanalzuweisung in einem ESL-System und ein verbessertes ESL-System, bei dem ein solches Verfahren verwendet wird bzw. das zur Verwendung eines solchen Verfahrens ausgebildet ist, bereitzustellen, sodass die erörterten Probleme vermieden sind.

### Zusammenfassung der Erfindung

Diese Aufgabe wird durch ein Verfahren gemäß Anspruch 1 gelöst. Der Gegenstand der Erfindung ist daher ein Verfahren zur Funk-Kanalzuweisung in einem System elektronischer Anzeigen, wobei das System eine Datenverarbeitungseinrichtung, Kommunikationsstationen und elektronische Anzeigen aufweist und jede Kommunikationsstation zur Nutzung eines durch die Datenverarbeitungseinrichtung definierten Funkkanals für eine Funkkommunikation mit ihr zugeordneten elektronischen Anzeigen ausgebildet ist, wobei das Verfahren die folgenden Verfahrensschritte aufweist, nämlich: Definieren des zu nutzenden Funkkanals auf Grundlage von durch die Kommunikationsstation an die Datenverarbeitungseinrichtung übermittelter Funkkanal-Aktivität-Daten, welche eine erfasste Funk-Aktivität im jeweiligen Funkkanal beschreiben, dadurch gegenzeichnet, dass die Übermittlung der Funkkanal-Aktivität-Daten durch die Kommunikationsstation zu einem Zeitpunkt erfolgt, nachdem die jeweilige Kommunikationsstation durch Nutzung eines Funkkanals einen erstmaligen Verbindungsaufbau mit zumindest einer der elektronischen Anzeigen durchgeführt hat, wobei die Funkkanal-Aktivität-Daten eine erfasste Funk-Aktivität nach besagtem erstmaligem Verbindungsaufbau beschreiben, und dass das Erfassen einer Funk-Aktivität in einem Funkkanal mit Hilfe einer elektronischen Anzeige am Ort der jeweiligen elektronischen Anzeige erfolgt und die am Ort der jeweiligen elektronischen Anzeige vorliegende Funk-Aktivität als Funkkanal-Aktivität-Daten zusammen mit einer die jeweilige elektronische Anzeige identifizierenden Anzeige-Kennung über die Kommunikationsstation, welcher die betreffende elektronische Anzeige zugeordnet ist, an die Datenverarbeitungseinrichtung übermittelt wird.

Weiterhin wird diese Aufgabe durch ein elektronisches Anzeige-System gemäß dem Anspruch 11 gelöst. Der Gegenstand der Erfindung ist daher ein elektronisches Anzeige-System, das elektronische Anzeigen aufweist, und Kommunikationsstationen aufweist, wobei jede Kommunikationsstation zur Nutzung eines definierten Funkkanals für eine Funkkommunikation mit der Kommunikationsstation zugeordneten elektronischen Anzeigen ausgebildet ist, und eine Datenverarbeitungseinrichtung aufweist, die zur Definition des durch die jeweilige Kommunikationsstation zu nutzenden Funkkanals auf Grundlage von durch die Kommunikationsstationen an die Datenverarbeitungseinrichtung übermittelten Funkkanal-Aktivität-Daten, welche eine Funk-Aktivität im jeweiligen Funkkanal beschreiben, ausgebildet ist, dadurch gegenzeichnet, die elektronische Anzeigen so ausgebildet sind, dass das Erfassen einer Funk-Aktivität in einem Funkkanal am Ort der jeweiligen elektronischen Anzeige erfolgt, dass die Kommunikationsstationen zur Übermittlung der Funkkanal-Aktivität-Daten zu einem Zeitpunkt ausgebildet sind, nachdem die jeweilige Kommunikationsstation durch Nutzung eines Funkkanals einen erstmaligen Verbindungsaufbau mit zumindest einer der elektronischen Anzeigen durchgeführt hat, wobei die Funkkanal-Aktivität-Daten eine erfasste Funk-Aktivität nach besagtem erstmaligen Verbindungsaufbau beschreiben, und dass die Kommunikationsstationen weiters ausgebildet sind, die am Ort der jeweiligen elektronischen Anzeige vorliegende Funk-Aktivität als Funkkanal-Aktivität-Daten zusammen mit einer die jeweilige elektronische Anzeige identifizierenden Anzeige-Kennung über die Kommunikationsstation, welcher die betreffende elektronische Anzeige zugeordnet ist, an die Datenverarbeitungseinrichtung zu übermitteln.

Weiterhin wird diese Aufgabe durch eine Verwendung gemäß dem Anspruch 12 gelöst. Der Gegenstand der Erfindung ist daher eine Verwendung von Kommunikationsstationen in einem elektronischen Anzeige-System, das elektronische Anzeigen aufweist, zur Übermittlung von Funkkanal-Aktivität-Daten, welche eine Funk-Aktivität im jeweiligen Funkkanal beschreiben, an eine Datenverarbeitungseinrichtung, die zur Definition des durch die jeweilige Kommunikationsstation zu nutzenden Funkkanals für eine Kommunikation mit ihr zugeordneten elektronischen Anzeigen auf Grundlage der übermittelten Funkkanal-Aktivität-Daten ausgebildet ist, dadurch gekennzeichnet, dass die Kommunikationsstation zur Übermittlung der Funkkanal-Aktivität-Daten zu einem Zeitpunkt verwendet wird, nachdem die jeweilige Kommunikationsstation durch Nutzung eines Funkkanals einen erstmaligen Verbindungsaufbau mit zumindest einer der elektronischen Anzeigen durchgeführt hat, wobei die Funkkanal-Aktivität-Daten eine erfasste Funk-Aktivität nach besagtem erstmaligen Verbindungsaufbau beschreiben, und dass das Erfassen einer Funk-Aktivität in einem Funkkanal mit Hilfe einer elektronischen Anzeige am Ort der jeweiligen elektronischen Anzeige erfolgt und die am Ort der jeweiligen elektronischen Anzeige vorliegende Funk-Aktivität als Funkkanal-Aktivität-Daten zusammen mit einer die jeweilige elektronische Anzeige identifizierenden Anzeige-Kennung über die Kommunikationsstation, welcher die betreffende elektronische Anzeige zugeordnet ist, an die Datenverarbeitungseinrichtung übermittelt wird.

Die erfindungsgemäßen Maßnahmen kommen bei einem elektronischen Anzeige-System zum Einsatz, das beispielsweise in einem Geschäftslokal eines Einzelhändlers installiert ist. Dort befinden sich elektronische Anzeigen, die zur Anzeige vom Produkt- und/oder Preis-Informationen zum Produkt ausgebildet sind. Diese elektronischen Anzeigen sind beispielsweise an Produktverpackungen angebracht, an den vorderen Rändern von Regalböden angebracht oder auch auf Produktpräsentationstischen aufgestellt oder auch an Kleidungsstücken befestigt.

Bestandteil des Systems ist weiterhin eine Datenverarbeitungseinrichtung, die durch einen vor Ort installierten Computer, insbesondere Server, und eine darauf abgearbeitete Software-Applikation realisiert ist, wobei die Software-Applikation die mithilfe der elektronischen Anzeigen dargestellten visuell wahrnehmbaren Informationen verwaltet bzw. bereitstellt und in einem sogenannten Planogramm das Geschäftslokal, die Produkte sowie deren Position und die zum jeweiligen Produkt gehörende elektronische Anzeige (und folglich auch die Position dieser Anzeigen) digital abbildet. Die Datenverarbeitungseinrichtung kann auch teilweise oder vollständig durch eine cloudbasierte Software realisiert sein, die dann in einem Rechenzentrum auf entsprechenden Computern bereitgestellt bzw. abgearbeitet wird und über das Internet mit der Infrastruktur des elektronischen Anzeige-Systems verbunden ist.

Bestandteil des Systems sind weiterhin mehrere im Geschäftslokal verteilt angebrachte Kommunikationsstationen, die auch als Access-Point oder Gateway-Units für die elektronischen Anzeigen bezeichnet werden. Sie sind beispielsweise mit der Datenverarbeitungseinrichtung über ein WLAN oder auch kabelgebunden verbunden und dienen der Funkkommunikation mit den elektronischen Anzeigen. Im Betrieb des Systems ist eine Gruppe der elektronischen Anzeigen einer einzigen Kommunikationsstation logisch zugeordnet, was bedeutet, dass sich die elektronischen Anzeigen bei ihrer Inbetriebnahme bei jener Kommunikationsstation registriert haben, von der sie in einem der verfügbaren Funkkanäle das stärkste Funksignal im Wesentlichen störungsfrei empfangen konnten. Die Kommunikationsstationen kommunizieren in weiterer Folge - insbesondere ohne die Zuordnung der elektronischen Anzeigen verändernde Maßnahmen - nur noch mit den bei ihnen registrierten elektronischen Anzeigen und können dabei Daten zwischen der Datenverarbeitungseinrichtung und den elektronischen Anzeigen austauschen und dadurch Zustandsinformationen von den elektronischen Anzeigen abfragen oder auch die Bildinhalte der Bildschirme der elektronischen Anzeige verändern.

Mit den erfindungsgemäßen Maßnahmen geht nun der Vorteil einher, dass auch nach der erstmaligen Registrierung der elektronischen Anzeigen bei den jeweiligen Kommunikationsstationen, also nach einer initialen Inbetriebnahme des elektronischen Anzeige-Systems, eine automatische Anpassung der Funk-Kanalzuweisung durchführbar ist. Dies erlaubt es, die im elektronischen Anzeige-System enthaltenen Kommunikationsstationen auch während des laufenden Betriebs des Systems automatisch in jenen, sich ggf. auch im Laufe der Zeit verändernden, Funkkanälen zu betreiben, in denen die geringsten Störungen durch andere Kommunikationsstationen aber auch andere funkende Geräte, die nicht zum System gehören, auftritt. Es lässt sich also in dem System die Zuordnung der Funkkanäle auch während des laufenden Betriebs angepasst an die tatsächlich vorliegende Funk-Aktivität im jeweiligen Funkkanal verändern, um einen störungsfreien Funkbetrieb zu gewährleisten.

Weitere, besonders vorteilhafte Ausgestaltungen und Weiterbildungen der Erfindung ergeben sich aus den abhängigen Ansprüchen sowie der nachfolgenden Beschreibung. Im Zusammenhang mit den unterschiedlichen Anspruchskategorien sei an dieser Stelle erwähnt, dass Vorteile und Wirkungen, die im Zusammenhang mit den Ansprüchen einer Kategorie angeführt wurden, auch für die entsprechend an die jeweilige Anspruchskategorie angepassten Maßnahmen der anderen Anspruchskategorie vorliegen bzw. zutreffen.

Um eine erfasste Funk-Aktivität im jeweiligen Funkkanal zu erhalten ist zunächst ein Erfassen der Funk-Aktivität im betreffenden Funkkanal nötig. Dies kann auf unterschiedliche Art und Weise erfolgen, wie nachfolgend im Detail erörtert wird.

So kann beispielsweise das Erfassen der Funk-Aktivität in einem Funkkanal mit Hilfe der Kommunikationsstation am Ort der jeweiligen Kommunikationsstation erfolgen.

Da in dem elektronischen Anzeige-System unterschiedliche Funkkanäle eines Frequenzbandes zur Kommunikation verfügbar sind, kann die Funk-Aktivität für eine Vielzahl, bevorzugt für vordefinierte, Funkkanäle erfolgen. Hierbei können auch Funkkanäle mitumfasst sein, die nicht unmittelbar durch das elektronische Anzeige-System zur Kommunikation zwischen den Kommunikationsstationen und den elektronischen Anzeigen zur Anwendung kommen. Bevorzugt werden hier jedoch, insbesondere nur, jene Funkkanäle berücksichtigt, die zur Nutzung durch die elektronischen Anzeigen vordefiniert sind, um den Erfassungsaufwand zu begrenzen bzw. zu minimieren.

Um die Funk-Aktivität zu erfassen, selektiert die Kommunikationsstation einen Funkkanal und empfängt in diesem Funkkanal Funksignale, die dort ggf. vorliegen. Bei Vorliegen solcher Funksignale beschreiben die entsprechenden Funkkanal-Aktivität-Daten die erfasste Funk-Aktivität im betreffenden Funkkanal derart, dass sie z.B. eine Auskunft über die Signalstärke der empfangenen Funksignale repräsentieren und/oder eine Information betreffend die Herkunft der Funksignale beinhalten, soweit dies aufgrund der Natur der Funksignal bzw. deren Informationsinhalt möglich ist. Der Vollständigkeit wegen sei an dieser Stelle erwähnt, dass bei Abwesenheit von dezidierten Funksignalen die Kommunikationsstation einfach nur ein Rauschen empfängt, wobei die entsprechenden Funkkanal-Aktivität-Daten in diesem Fall den betreffenden Funkkanal als unbenutzt beschreiben.

Die Kommunikationsstationen sind üblicherweise in einem Geschäftslokal zum Beispiel fix an der Decke des Geschäftslokals befestigt und mit entsprechend großem Abstand zueinander positioniert, sodass jede Kommunikationsstation funktechnisch einen Raumbereich des Geschäftslokals für die Kommunikation mit den ihr zugeordneten elektronischen Anzeigen abdecken kann. Da die Positionen der Kommunikationsstationen bekannt sind, lässt sich durch diese Maßnahme eine entsprechend grobgranulare Erfassung der Funk-Aktivität für den jeweiligen Raumbereich, in dessen Zentrum die Kommunikationsstation sitzt, durchführen, wobei natürlich nur die am Ort der Kommunikationsstation eintreffenden Funksignale von dieser auch tatsächlich erfasst werden können.

Die erfasste Funk-Aktivität kann zum Beispiel die Funk-Aktivität anderer Kommunikationsstationen betreffen bzw. beschreiben, die in einer Entfernung von der gegenständlichen Kommunikationsstation angeordnet sind und den gleichen Funkkanal wie die gegenständliche Kommunikationsstation verwenden. Solche andere Kommunikationsstationen können verhältnismäßig leicht als Bestandteile des elektronischen Anzeige-Systems identifiziert werden, weil sie gemäß einem eindeutigen, im elektronischen Anzeige-System grundsätzlich bekannten Kommunikationsprotokoll senden. Sie können auch anhand von eindeutig identifizierbaren Daten bzw. Datenstrukturen identifizierbar sein.

Die erfasste Funk-Aktivität kann jedoch auch durch andere funkende Geräte, wie beispielsweise in dem Geschäftslokal positionierte WLAN-Access-Points verursacht sein. Selbst wenn solche WLAN-Access-Points in anderen Funkkanälen als jedem Funkkanal funken, für den die Kommunikationsstation gerade im Empfangsmodus ist, können die auftretenden WLAN-Funksignal-Seitenbänder für die Kommunikation zwischen der Kommunikationsstation und den ihr zugeordneten elektronischen Anzeigen störend sein. Dies gilt insbesondere für die Kommunikation von den elektronischen Anzeigen, die sich im Sendemodus befinden, hin zu der Kommunikationsstation, die sich im Empfangsmodus befindet. In dieser Situation kann es vorkommen, dass Seitenbänder, die aus der WLAN-Access-Point verursachten FuncKommunikation stammen und bis in einen ESL-Funkkanal reichen, gegenüber den durch eine elektronische Anzeige ausgesandten Funksignalen in dem ESL-Funkkanal dominieren. Dies kann einen Empfang der von den elektronischen Anzeigen ausgesandten Funksignalen bei der Kommunikationsstation unmöglich machen und somit den Funkverkehr zwischen der Kommunikationsstation und den ihr zugeordneten elektronischen Anzeigen signifikant beeinträchtigen.

Die WLAN-Access-Points können räumlich getrennt von den Kommunikationsstationen des elektromischen Anzeige-Systems lokalisiert sein. Im Unterschied dazu kann gemäß einer speziellen Ausbildungsform der Kommunikationsstation die Kommunikationsstation ein erstes Funk-Kommunikationsmodul zur Funkkommunikation gemäß einem ersten Kommunikationsprotokoll mit den elektronischen Anzeigen aufweisen und ein zweites Funk-Kommunikationsmodul zur Funkkommunikation gemäß einem von dem ersten Kommunikationsprotokoll unterschiedlichen zweiten Kommunikationsprotokoll zur Funkkommunikation mit anderen Geräten als den elektronischen Anzeigen aufweisen. In dieser speziellen Ausbildungsform der Kommunikationsstation handelt es sich de facto um eine Kombination-Kommunikationsstation, bei der die unterschiedlichen Funk-Kommunikationsmodule in einem Gerät bzw. Gerätegehäuse kombiniert bzw. integriert sind. Eine solche Kommunikationsstation kann als erstes Funk-Kommunikationsmodul ein ESL-Kommunikationsmodul und als zweites Funk-Kommunikationsmodul beispielsweise ein WLAN-Kommunikationsmodul aufweisen. Der Vollständigkeit wegen sei an dieser Stelle noch erwähnt, dass das zweite Funk-Kommunikationsmodul auch zum Funken gemäß einer anderen Spezifikation bzw. eines anderen Standards, wie beispielsweise ZigBee oder Bluetooth usw. ausgebildet sein kann. In der Kombination-Kommunikationsstation können die beiden Kommunikationsmodule grundsätzlich durch baulich bzw. physikalisch getrennte elektronische Komponenten realisiert sein. Bevorzugt weist die Kombination-Kommunikationsstation jedoch eine für beide Kommunikationsmodule einheitliche, also gemeinsam genutzte, computerisierte Hardware-Plattform auf, auf der zwei unterschiedliche, die Funktion des jeweiligen Kommunikationsmoduls realisierende Software-Treiber installiert sind und abgearbeitet werden, um die unterschiedlichen Funktionalitäten, insbesondere Kommunikationsprotokolle, der beiden Kommunikationsmodule zu realisieren. Weiterhin kann die Kombination-Kommunikationsstation zwei unterschiedlich ausgebildete Sende- und Empfangs-Einheiten aufweisen, welche an die gemeinsame Hardware-Plattform gekoppelt sind, wobei jede der Sende- und Empfangs-Einheiten ein physikalisches Funkinterface für das jeweilige Kommunikationsmodul bildet. Diese Einheiten können beispielsweise eine kommunikationsmodulspezifische Elektronik, die z.B. Modulatoren und Demodulatoren wie auch Antennen bzw. Antennen-Schwingkreise und dergleichen aufweisen.

In dieser Konfiguration muss die Kommunikationsstation, hier das ESL-Kommunikationsmodul, keine Funksignale empfangen, um die Funk-Aktivität des in der Kombination-Kommunikationsstation integrierten z.B. WLAN-Kommunikationsmoduls zu erfassen. Vielmehr erlaubt die Integration der beiden Kommunikationsmodule in einem Gerät, dass das Erfassen der Funk-Aktivität bei dem ersten Funk-Kommunikationsmodul durch ein Abfragen der Funkkanalnutzung über eine Hard- und/oder Software-Schnittstelle (innerhalb der Kombination-Kommunikationsstation) von dem zweiten Funk-Kommunikationsmodul erfolgen kann.

In einem Geschäftslokal können unterschiedlichste Varianten von Kommunikationsstationen installiert sein, wie beispielsweise eine Anzahl der erörterten Kombination-Kommunikationsstationen und eine andere Anzahl von "einfachen" Kommunikationsstationen, die nur der Funkkommunikation mit den elektronischen Anzeigen dienen.

Unabhängig davon, wie die Funk-Aktivität tatsächlich erfasst wird, werden die von den verschiedenen Kommunikationsstationen im jeweiligen Funkkanal erfassten Funk-Aktivitäten von den Kommunikationsstationen als die Funkkanal-Aktivität-Daten an die zentrale Datenverarbeitungseinrichtung übermittelt.

Für jene Kommunikationsstationen, bei denen es sich um eine Kombination-Kommunikationsstation handelt, definiert die Datenverarbeitungseinrichtung sowohl einen durch das erste Funk-Kommunikationsmodul zu nutzenden ersten Funkkanal als auch einen durch das zweite Funk-Kommunikationsmodul zu nutzenden zweiten Funkkanal, der mit dem ersten Funkkanal im Wesentlichen, insbesondere auch unter Beachtung von Seitenbändern, nicht überlappt. Somit lässt sich auf einfache Weise nicht nur eine zentral gesteuerte Funk-Kanalzuweisung für die "einfachen" Kommunikationsstationen realisieren, sondern auch die Funk-Kanalzuweisung der ESL-Kommunikationsmodule und der WLAN-Kommunikationsmodule in den Kombination-Kommunikationsstationen zentral steuern, ggf. laufend anpassen und damit auch im zeitlichen Verlauf optimieren. Dies erfolgt vor allem auch unter Berücksichtigung der durch die "einfachen" ESL-Kommunikationsstationen zu benutzenden Funkkanäle wie auch der in den Kombination-Kommunikationsstationen verbauten ESL-Kommunikationsmodulen, sodass auf automatische Weise ein weitestgehend störungsfreier ESL-Funkverkehr, insbesondere trotz extremer räumlicher Nähe der unterschiedlichen Kommunikationsmodule innerhalb der Kombination-Kommunikationsstation, sichergestellt ist.

Wird jedoch nur die jeweilige Kommunikationsstation zur Erfassung der Funk-Aktivität am jeweiligen Ort der Kommunikationsstation verwendet, lassen sich nur grob bis gar nicht Rückschlüsse auf in weiterer Entfernung von der Kommunikationsstation bzw. im Randbereich des jeweiligen funktechnisch abgedeckten Raumbereichs vorliegende Funk-Aktivitäten ziehen. Insbesondere lassen sich dabei keine Aussagen über die tatsächliche Funk-Aktivität am Ort der jeweiligen elektronischen Anzeige tätigen, die der betreffenden Kommunikationsstation zugeordnet ist. Diese elektronischen Anzeigen sind in dem Geschäftslokal entsprechend der jeweiligen Topologie (Anordnung der Regale und der Regalschienen bzw. Regalböden, an denen sie befestigt sind) innerhalb des mit der jeweiligen Kommunikationsstation funktechnisch abgedeckten Raumbereichs verteilt angeordnet. Da ihre Funksignale üblicherweise die niedrigste Sendeleistung aufweisen, sind es gerade die elektronischen Anzeigen, deren Funksignale von Funk-Störsignalen im durch sie genutzten Funkkanal beeinträchtigt sind.

Erfindungsgemäß erfolgt das Erfassen einer Funk-Aktivität in einem Funkkanal mit Hilfe einer elektronischen Anzeige am Ort der jeweiligen elektronischen Anzeige und die am Ort der jeweiligen elektronischen Anzeige vorliegende Funk-Aktivität wird als Funkkanal-Aktivität-Daten zusammen mit einer die jeweilige elektronische Anzeige identifizierenden Anzeige-Kennung über die Kommunikationsstation, welcher die betreffende elektronische Anzeige zugeordnet ist, an die Datenverarbeitungseinrichtung übermittelt. Mit dieser Maßnahme lässt sich die Funk-Aktivität am jeweiligen Ort der betreffenden elektronischen Anzeige mit höchster Relevanz ermitteln. Hervorzuheben ist, dass dafür keine weiteren Hilfsmaßnahmen, wie manuelle Vermessungen der Funk-Aktivität im Geschäftslokal, nötig sind. Vielmehr werden die elektronischen Anzeigen selbst als Vorort-Sonden zur Erfassung der Funk-Aktivität verwendet.

Besonders bevorzugt erfolgt die Funkkommunikation zwischen einer der Kommunikationsstationen und der ihr zugeordneten elektronischen Anzeigen gemäß einem Zeitschlitzkommunikationsverfahren, bei dem in sich wiederholender Folge eine Anzahl von Zeitschlitzen pro Zeitschlitzzyklus, insbesondere eine fixe Anzahl, zur Kommunikation zwischen der Kommunikationsstation und den ihr zugeordneten elektronischen Anzeigen bereitstehen und jeder Zeitschlitz durch ein eindeutiges Zeitschlitzsymbol gekennzeichnet ist, wobei jede elektronische Anzeige durch Nutzung des Zeitschlitzsymbols genau ein Zeitschlitz zugordnet ist, um einen Synchronismus mit der Kommunikationsstation autonom festzustellen und gegebenenfalls mit der Kommunikationsstation zu kommunizieren. Hierbei hat es sich als besonders vorteilhaft erwiesen, dass das Erfassen einer Funk-Aktivität in einem Funkkanal mit Hilfe einer elektronischen Anzeige während eines Zeitschlitzes erfolgt. Mit dieser Maßnahme geht die vorteilhafte Wirkung einher, dass die Zeitpunkte bzw. Zeitbereiche, die im Wesentlichen zu den Zeitschlitzen korrespondieren können, der Erfassung der Funk-Aktivität durch die im Prinzip starre Struktur des Zeitschlitzkommunikationsverfahrens genau definiert sind. Die elektronischen Anzeigen müssen also das strikte Timing des Zeitschlitzkommunikationsverfahren nicht verlassen, sondern können die Erfassung der Funk-Aktivität in ihrem mit der betreffenden Kommunikationsstation synchronen Zustand durchführen. Eine andernfalls nach dem Erfassen der Funk-Aktivität nötige Neusynchronisation, die relativ energieaufwändig ist, kann somit entfallen, was sich positiv auf die Lebensdauer des Energiespeichers, z.B. der Batterie, der elektronischen Anzeigen auswirkt.

Bevorzugt kommt ein proprietäres Zeitschlitzkommunikationsverfahren zum Einsatz, bei dem in sich wiederholender Folge z.B. innerhalb von n Sekunden, z.B. 15 Sekunden, m Zeitschlitze, z.B. 255 Zeitschlitze, zum Einsatz kommen. Die n Sekunden bilden einen Zeitschlitzzyklus. In diesem Zeitschlitzkommunikationsverfahren stehen also m Zeitschlitze innerhalb eines Zeitschlitzzyklus für eine Kommunikation mit den elektronischen Anzeigen zur Verfügung. Jede der elektronischen Anzeigen kann einem der Zeitschlitze zugeordnet sein, wobei einem bestimmten Zeitschlitz auch mehrere elektronischen Anzeigen zugeordnet sein können.

Jede elektronische Anzeige weist im Wesentlichen eine Funk-Kommunikationsstufe, auch Transceiver genannt, und eine damit zusammenwirkende Logikstufe auf, die logische Funktionen der elektronischen Anzeige bereitstellt. Die Logikstufe kann z.B. vollständig durch Hardware realisiert sein oder einen Mikroprozessor und Speicherbausteine oder einen Mikrokontroller mit integrierten Speicherbausteinen aufweisen, sodass in den Speicherbausteinen gespeicherte Software abarbeitbar ist. Die elektronische Anzeige kann mit Hilfe ihrer Funk-Kommunikationsstufe ein Funk-Signal empfangen, in dem Funk-Signal enthaltene Empfangsdaten mit Hilfe der Logikstufe verarbeiten und gegebenenfalls mit Hilfe der Logikstufe Antwortdaten generieren und diese über ihre Funk-Kommunikationsstufe wieder als ein Funk-Signal abgeben. Die Funk-Kommunikationsstufe weist Mittel zur Funkkommunikation und zur Konvertierung von analogen Signalen in digitale Signale und umgekehrt auf. Dies kann ein Modulator, ein Demodulator, ein Antennenschwingkreis und eine Antenne usw. sein.

Eine solche elektronische Anzeige kann für ihre Energieversorgung einen Energiespeicher, wie z.B. eine Batterie oder ein Solarpaneel gekoppelt mit einer aufladbaren Batterie, aufweisen. Auch kann sie durch ein Empfangen von Funksignalen mit Energie versorgt werden, wie dies beispielsweise aus der NFC- bzw. RFID-Technologie bekannt ist oder auch im Kontext von "Power-over-WiFi" zur Anwendung kommt.

Um möglichst energieeffizient zu arbeiten, weisen die elektronischen Anzeigen verschiedene Betriebs-Zustände auf. Eine elektronische Anzeige weist in einem Aktiv-Zustand einen relativ hohen Energieverbrauch auf. Der Aktiv-Zustand liegt z.B. beim Senden oder Empfangen von Daten, beim Display-Update, beim Batteriespannungsmessen usw. vor. In einem Schlaf-Zustand liegt dagegen ein relativ niedriger Energieverbrauch vor. Bevorzugt werden in dem Schlaf-Zustand so viele elektronische Komponenten wie möglich von der Stromversorgung getrennt bzw. abgeschattet oder zumindest in einem Modus mit möglichst geringem Energiebedarf betrieben. Der Aktiv-Zustand liegt vorwiegend in dem für die elektronische Anzeige bestimmten Zeitschlitz zur Kommunikation mit der Kommunikationsstation vor. In dem Aktiv-Zustand weist die elektronische Anzeige z.B. eine Empfangsbereitschaft auf, um Befehle und gegebenenfalls auch Empfangs-Daten von der Kommunikationsstation zu empfangen und mit Hilfe der Logikstufe zu verarbeiten. Im Aktiv-Zustand können auch mit Hilfe der Logikstufe Sende-Daten generiert und an die Kommunikationsstation kommuniziert werden. Außerhalb des für die elektronische Anzeige bestimmten Zeitschlitzes wird die elektronische Anzeige vorwiegend in dem energiesparenden Schlaf-Zustand betrieben. In dem Schlaf-Zustand führt die Logikstufe bzw. die Zeitsteuerstufe nur jene Aktivitäten durch, die für das Timing zum rechtzeitigen Aufwachen nötig sind, damit die elektronische Anzeige zum nächsten für sie bestimmten Zeitschlitz zum Empfang eines Synchronisations-Datensignals und / oder zur Kommunikation mit der Kommunikationsstation bereit ist. Um energieeffizient zu arbeiten und damit eine möglichst lange Lebensdauer der elektronischen Anzeige zu erreichen, besteht die grundlegende Betriebsstrategie darin, die synchrone elektronische Anzeige so lange wie möglich im Schlaf-Zustand zu halten und nur dann, wenn unbedingt nötig, zwecks Datenübertragung mit der Kommunikationsstation für eine möglichst kurze Zeitspanne im Aktiv-Zustand zu betreiben.

Zum Feststellen des Synchronismus mit der Kommunikationsstation reicht es aus, dass jede elektronische Anzeige, die der betreffenden Kommunikationsstation zugeordnet ist, über das Zeitschlitzsymbol Bescheid weiß, welches den für sie bestimmten Zeitschlitz anzeigt und bevorzugt zu Beginn des Zeitschlitzes als Bestandteil des Synchronisations-Datensignals ausgesandt wird. Jede der elektronischen Anzeigen orientiert sich also individuell an dem Auftreten eines für sie relevanten Zeitschlitzsymbols, identifiziert das für sie relevante Zeitschlitzsymbol und definiert ihren nächsten Aufwachzeitpunkt, um mit dem durch die Kommunikationsstation vorgegebenen Timing des Zeitschlitzkommunikationsverfahrens konform zu gehen. Dabei reicht es völlig aus, dass das Zeitschlitzsymbol den jeweiligen Zeitschlitz eindeutig identifiziert, z.B. mit einer für jeden Zeitschlitz individuellen Zeitschlitzkennung. Weitere Informationen kodiert in das Synchronisations-Datensignal sind nicht nötig, um eine elektronische Anzeige synchron mit der Kommunikationsstation zu betreiben. Die elektronische Anzeige stellt ihren Synchronismus mit der Kommunikationsstation autonom, also alleine durch den Umstand des Erkennens des Zeitschlitzsymbols fest, das zu dem von ihr erwarteten Zeitpunkt bzw. in einem Erwartungszeitfenster auftritt und den für sie bestimmten Zeitschlitz anzeigt.

Nachdem die elektronische Anzeige ihren Synchronismus wie zuvor erörtert festgestellt hat, reicht es grundsätzlich aus, wenn sie wieder in den Schlaf-Zustand wechselt, weil der nächste Aufwachzeitpunkt automatisch durch den ihr bekannten Zeitraster des Zeitschlitzkommunikationsverfahrens bekannt ist. Das Definieren des neuen Aufwachzeitpunktes kann sich somit darauf beschränken, dass eine z.B. Zeitsteuerstufe (z.B. ein Timer) der elektronischen Anzeige mit den bereits zuvor zum Wechseln vom Schlaf-Zustand in den Aktiv-Zustand benutzen Timing-Parameter neu gestartet wird. Danach kann die elektronische Anzeige wieder in den Schlaf-Zustand wechseln und dort verharren, bis dass, ausgelöst durch die Zeitsteuerung, wieder ein Aufwachen und Wechseln von dem Schlaf-Zustand in den Aktiv-Zustand zu dem neuen Aufwachzeitpunkt in dem nächsten Zeitschlitzzyklus durchgeführt wird. Die elektronische Anzeige muss jedoch nicht zwingend für den Rest des für sie bestimmten Zeitschlitzes im Schlaf-Zustand verharren, sondern kann auch während des Zeitschlitzes oder auch des Zeitschlitzzyklus weitere Aufgaben in einem Aktiv-Zustand bearbeiten, wie zum Beispiel das Erfassen der Funk-Aktivität in einem oder mehreren der zur Verfügung stehenden Funkkanäle.

Im Zusammenhang mit dem Zeitschlitzkommunikationsverfahren ist es weiterhin von Vorteil, dass das Erfassen einer Funk-Aktivität in einem Funkkanal mit Hilfe einer elektronischen Anzeige in einem Zeitschlitz erfolgt, der hinsichtlich einer Kommunikation zwischen der Kommunikationsstation und den ihr zugeordneten elektronischen Anzeigen, zu denen auch die das Erfassen der Funk-Aktivität durchführende elektronische Anzeige gehört, unbenutzt ist. Damit ist sichergestellt, dass tatsächlich Funksignale empfangbar bzw. identifizierbar sind, die nicht durch die Kommunikationsstation, der die erfassende elektronische Anzeige zugeordnet ist, oder durch die dieser Kommunikationsstation zugeordneten elektronischen Anzeigen verursacht sind. Zwischen besagter Kommunikationsstation und den ihr zugeordneten elektronischen Anzeigen herrscht also Funkstille. Da die Datenverarbeitungseinrichtung und/oder die Kommunikationsstation die Zuordnung der ihr zugehörigen elektronischen Anzeigen zu den Zeitschlitzen des durch die betreffende Kommunikationsstation bereitgestellten Zeitschlitzkommunikationsverfahrens kennt, kann die Gruppe der elektronischen Anzeigen gezielt dahingehend (z.B. durch einen Befehl) programmiert werden, einen in naher Zukunft eigen-kommunikationsfreien Zeitschlitz zum "lauschen" auf Funksignale anderer Funkgeräte (andere Kommunikationsstationen, elektronische Anzeigen außerhalb der Gruppe der betreffenden Kommunikationsstation, WLAN-Router, usw.) zu nutzen, in dem gerade kein Funkverkehr zwischen der Kommunikationsstation und irgendeiner ihr zugeordneten elektronischen Anzeigen erfolgt. Dies erlaubt eine maximale Flexibilität bei der Nutzung der zur Verfügung stehenden Zeitschlitze zur Erfassung der Funk-Aktivität. Damit geht jedoch auch ein erhöhter Energieverbrauch einher, weil die elektronischen Anzeigen in ihrem angestammten Zeitschlitz funktechnisch mit einem Befehl angesprochen werden müssen, also den Befehl empfangen und decodieren müssen, der sie dazu veranlasst, gegebenenfalls auch in einem anderen als ihrem angestammten Zeitschlitz eine Energie konsumierende Empfangsaktivität einzunehmen, um die Erfassung der Funk-Aktivität durchzuführen. Auch kann ein plötzlich aufkommender Kommunikationsbedarf im programmierten Zeitschlitz dazu führen, dass in diesem Zeitschlitz eine unnötige Erfassung der Funk-Aktivität erfolgt, womit natürlich auch ein unnötiger Energieverbrauch bei den erfassenden elektronischen Anzeigen einher geht.

Daher kann es besonders vorteilhaft sein, wenn das Erfassen einer Funk-Aktivität in einem Funkkanal mit Hilfe einer elektronischen Anzeige in einem vordefinierten Zeitschlitz, insbesondere dem letzten Zeitschlitz, des Zeitschlitzzyklus erfolgt. So kann beispielsweise in dem Zeitschriftkommunikationsverfahren per Definition ein bestimmter Zeitschlitz für das Erfassen einer Funk-Aktivität vorreserviert sein. Diesen vorreservierten Zeitschlitz können z.B. alle einer Kommunikationsstation zugeordneten elektronischen Anzeigen zur Erfassung der Funk-Aktivität nützen, und zwar ohne, dass sie zuvor energieaufwändig dahingehend mit Hilfe eines Befehls programmiert werden müssen. Grundsätzlich könnte jeder Zeitschlitz für diese Maßnahme vorreserviert sein. Aus Gründen der einfacheren Verwaltung der zur Verfügung stehenden Zeitschlitze hat es sie sich jedoch als vorteilhaft erwiesen, die Zeitschlitze vor dem letzten Zeitschlitz des Zeitschlitzzyklus den einer Kommunikationsstation zugeordneten elektronischen Anzeigen zuzuweisen, also die Zeitschlitze sukzessive den elektronische Anzeigen zuzuordnen, und nur den in der Reihenfolge der Zeitschlitze letzten Zeitschlitz für die Erfassung der Funk-Aktivität zu nützen.

Bevorzugt wird die bei der betreffenden elektronischen Anzeige erfasste Funk-Aktivität für einen oder mehrere unterschiedliche, bevorzugt vordefinierte, Kanäle mit Hilfe der Funkkanal-Aktivität-Daten gespeichert. Dies hat sich insofern als vorteilhaft erwiesen, weil bei der Funkkommunikation innerhalb des elektronischen Anzeige-Systems mehrere Kanäle zur Verfügung stehen, für welche die jeweilige Funk-Aktivität geklärt werden muss. Insbesondere bei jener Ausbildungsform, bei der die Funk-Aktivität durch die jeweilige (batteriebetriebene) elektronische Anzeige an ihrem Ort erfasst wird, ist es von Vorteil, die Anzahl der Funkkanäle zu beschränken und insbesondere nur eine vordefinierte Liste an Funkkanälen zu berücksichtigen, um den Energiebedarf für die Erfassung der Funk-Aktivität und auch für den Speicherungsvorgang der Funkkanal-Aktivität-Daten in Grenzen zu halten. Somit lässt sich für jede die Funk-Aktivität in einem der Funkkanäle erfassende elektronische Anzeige eine Tabelle oder in anderen Worten eine Datenstruktur aufbauen, welche die an ihrem Ort zum Zeitpunkt der Erfassung feststellbare Funk-Aktivität im jeweiligen Funkkanal beschreibt.

Die Übermittlung der gespeicherten Funkkanal-Aktivität-Daten könnte grundsätzlich auch am Ende jenes Zeitschlitzes erfolgen, der für die Erfassung der Funk-Aktivität genutzt wird. Sind in diesem Zeitschlitz jedoch eine größere Anzahl von elektronischen Anzeigen mit der Erfassung beschäftigt, kann dies dazu führen, dass nicht alle elektronischen Anzeigen ihre gespeicherten Funkkanal-Aktivität-Daten in diesem Zeitschlitz übertragen können, weil die Dauer des Zeitschlitzes dafür möglicherweise zu kurz ist.

Daher hat es sich als besonders vorteilhaft erwiesen, dass die bei der betreffenden elektronischen Anzeige gespeicherten Funkkanal-Aktivität-Daten in jenem der elektronischen Anzeige zugeordneten Zeitschlitz an die Kommunikationsstation übertragen werden. Die bevorzugte Übertragung der Funkkanal-Aktivität-Daten erfolgt daher in dem der jeweiligen elektronischen Anzeige angestammten Zeitschlitz. Wann genau diese Übertragung stattzufinden hat, kann von den Umständen abhängen, sodass bei einer Priorisierung von anderen verarbeitungstechnischen Aufgaben oder auch Kommunikationsaufgaben die Übertragung auch zu einem wesentlich späteren Zeitpunkt, also in zukünftigen Zeitschriftzyklen erfolgen kann.

Durch die Erfassung der Funk-Aktivität durch eine der Kommunikationsstationen des ESL-Systems an ihrem jeweiligen Ort lassen sich jedoch auch weitere Erkenntnisse gewinnen.

So kann beispielsweise eine Entfernungsbewertung generiert bzw. eine örtliche Nachbarschaftsbeziehung herausgefunden werden, welche die Entfernung zwischen der empfangenden Kommunikationsstation zu anderen Kommunikationsstationen bewertet. Unter dieser Bewertung kann z.B. verstanden weder, dass der Abstand zu gering oder ausrechend ist.

Da nämlich die empfangende Kommunikationsstation ja die Systematik und Details des Zeitschlitz-Kommunikationsverfahrens kennt, lässt sich anhand der empfangenen Funksignale bzw. deren Inhalte leicht unterscheiden, ob es sich um Funksignale von ESLs handelt oder um Funksignale einer anderen Kommunikationsstation. Andere, nämlich sendende Kommunikationsstationen des betroffenen ESL-Systems senden ja bekanntlich in strikter Regelmäßigkeit das Synchronisations-Datensignals (im Fachjargon auch "Beacon" genannt), was sie von den ESLs des ESL-Systems unterscheidbar macht. Auch sind die Kommunikationsstationen des ESL-Systems eindeutig durch ihre individuelle Kennung im jeweiligen ESL-System identifizierbar.

Die Erkenntnis, dass die festgestellte Funk-Aktivität im beobachteten Funkkanal auf einen direkten Empfang der Funk-Signale einer anderen Kommunikationsstation des ESL-Systems zurückzuführen ist, führt unmittelbar zur Feststellung, dass eine anderen Kommunikationsstation existiert, deren Sendereichweite bis zu jener reicht, welche die Funk-Aktivitäten erfasst, und dass sie den beobachteten Funkkanal benützt. Dies kann dazu benutzt werden, den betroffenen Funkkanal durch die empfangende Kommunikationsstation nicht zu nutzen oder den Funkkanal für die andere, nämlich sendende Kommunikationsstation zu ändern, weil die beiden Kommunikationsstationen räumlich zu nahe beieinander lokalisiert sind und sich beim Funken im selben Funkkanal stören könnten bzw. werden.

Demgegenüber kann die Erkenntnis, dass die festgestellte Funk-Aktivität im beobachteten Funkkanal ausschließlich auf Funksignale von ESLs zurückzuführen ist, die einer anderen als der empfangenden Kommunikationsstation zugeordnet sind, zur Feststellung führen, dass die andere Kommunikationsstation in ausreichend weiter Entfernung positioniert ist und die von ihr direkt ausgesandten Funksignale mit großer Wahrscheinlichkeit den Empfang der ESL-Funksignal, die von den ESLs ausgesandt werden, welche der gerade die Funk-Aktivität erfassenden Kommunikationsstation zugeordnet sind, nicht behindert. In diesem Fall wird also auf indirekte Weise festgestellt, dass sich in der Nähe eine weitere Kommunikationsstation befindet, deren Sendereichweite jedoch nicht ausreicht, um ihre Funksignale direkt bei der den Funkkanal prüfenden Kommunikationsstation zu empfangen. Vielmehr wird auf die Existenz der anderen Kommunikationsstation geschlossen, weil Antwort-Funksignale von dieser anderen Kommunikationsstation zugeordneten ESLs als Reaktion auf die Funksignale (z.B. des Synchronisations-Datensignals) dieser anderen Kommunikationsstation wahrnehmbar sind. In dieser Situation wäre grundsätzlich kein Funkkanalwechseln nötig. Häufen sich jedoch die Funksignale solcher anderen Kommunikationsstationen zugeordneter ESLs, kann dies auch als Indikator dafür genutzt werden, dass der Funkkanal besser zu wechseln wäre, um Störungen nachhaltig zu verhindern.

Auch kann mit der vorangehend erörterten Systematik festgestellt werden, ob die im betreffenden Funkkanal festgestellte Funk-Aktivität aus dem eigenen ESL-System stammt oder ob die festgestellte Funk-Aktivität aus einem anderen, z.B. benachbarten, ESL-System stammt. Diese Situation kann dann gegeben sein, wenn zwei Geschäftslokale benachbart zueinander lokalisiert sind und in jedem der Geschäftslokale ein separates ESL-System betrieben wird. Dieses andere ESL-System kann z.B. daran erkannt werden, dass mit bekannter Systematik des Zeitschlitz-Kommunikationsverfahrens Funk-Aktivitäten von unbekannten Kommunikationsstationen und ELSs auftreten. Sobald dies festgestellt wurde, kann das ESL-System, in dem die erfindungsgemäßen Maßnahmen implementier sind, die Funk-Kanalzuweisung durchführen, um einerseits Störungen durch die Funksignale, die ihren Ursprung in den Räumlichkeiten des eigenen Geschäftslokals haben, und andererseits auch Störungen durch andere Funksignale, die ihren Ursprung in den Räumlichkeiten des anderen Geschäftslokals haben, zu reduzieren bzw. zu vermeiden.

Um eine aussagekräftige Beschreibung der Funk-Aktivität im jeweiligen Funkkanal zu erhalten, hat es sich als zielführend erwiesen, dass das Erfassen der Funk-Aktivität einen Funk-Signalempfang und eine Bestimmung eines Received-Signal-Strength-Indicator (abgekürzt RSSI) für die empfangenen Funksignale umfasst. Dies lässt sich durch die Elektronik des jeweiligen Empfangsgeräts realisieren.

Die im elektronischen Anzeige-System erfassten Funk-Aktivitäten für die jeweiligen Funkkanäle werden wie erwähnt an die zentrale Datenverarbeitungseinrichtung übermittelt, wo sie in einem dreidimensionalen digitalen Model des betreffenden Geschäftslokals jenen räumlichen Positionen zugewiesen werden, bei denen sie erfasst wurden. Somit lässt sich eine dreidimensionale Karte der Funk-Aktivitäten im Geschäftslokal generieren. Davon ausgehend erfolgt das Definieren des durch die jeweilige Kommunikationsstation für die Funkkommunikation mit den ihr zugeordneten elektronischen Anzeigen zu nutzenden Funkkanals durch die Datenverarbeitungsvorrichtung derart, dass andere Funkkanal-Aktivitäten als jene der jeweiligen Kommunikationsstation oder der ihr zugeordneten elektronischen Anzeigen in dem definierten Funkkanal im Wesentlichen vernachlässigbar sind. Dies wird im Wesentlichen dadurch erreicht, dass für räumlich benachbarte Kommunikationsstationen im betreffenden Frequenzband möglichst weit voneinander entfernte Funkkanäle gewählt werden. Insbesondere bei einem Vorliegen von leistungsstarken WLAN-Funk-Aktivitäten in einem oder mehreren der ESL-Funkkanäle wird die räumliche Verteilung der zu nutzenden ESL-Funkkanäle so umgeschichtet, dass auch Seitenbänder der WLAN-Signale am jeweiligen Ort der elektronischen Anzeigen keine Rolle im zu nutzenden ESL-Funkkanal mehr spielen. Gegebenenfalls wird zur Lösung des Optimierungsproblems auch eine veränderte WLAN-Funk-Kanalzuweisung definiert. Benachbarte Funkkanäle eines Frequenzbands sollen also bevorzugt geographisch möglichst weit voneinander entfernt genutzt werden. Die Zuordnung der zukünftig zu nutzenden Funkkanäle bei den Kommunikationsstationen wird also unter diesem Gesichtspunkt optimiert, wobei wie bereits erwähnt auch auf die Funkkanalbelegung der hinsichtlich ihres Funksignalpegels üblicherweise dominierenden WLAN-Funksysteme Einfluss genommen werden kann, um ihr Störungspotential zu minimieren bzw. so weit als möglich zu unterdrücken. Summarisch betrachtet führt dieser Optimierungsprozess ausgehend von der gegenwärtigen örtlichen Ist-Verteilung der genutzten Funkkanäle zu einer zukünftigen örtlichen Soll-Verteilung der zu nutzenden Funkkanäle. Hierbei wird für das jeweilige Gerät, also für die Kommunikationsstation wie auch ggf. für die Kombination-Kommunikationsstation ein neuer zu nutzender Funkkanal durch die Datenverarbeitungseinrichtung festgelegt, was durch Funkkanal-Definitionsdaten repräsentiert wird.

Um den neu festgelegten, also zukünftig zu nutzenden Funkkanal dem betreffenden Gerät auch zugänglich zu machen, umfasst das Definieren des zu nutzenden Funkkanals ein Übermitteln der Funkkanal-Definitionsdaten, die bei der Kommunikationsstation zur Einstellung des zu nutzenden Funkkanals verwendbar sind, an die Kommunikationsstation. In diesem Zusammenhang sei noch erwähnt, dass im Falle der Identität des gegenwärtig benutzten Funkkanals und des in Zukunft zu benutzenden Funkkanals auf die Übermittlung der Funkkanal-Definitionsdaten an das betreffende Gerät verzichtet werden kann.

Gleiches gilt sinngemäß auch für betroffene WLAN-Accesspoints oder WLAN-Kommunikationsmodule, denen der zu nutzenden WLAN-Funkkanal nach seiner Festlegung durch die Datenverarbeitungseinrichtung mithilfe besagter Funkkanal-Definitionsdaten mitgeteilt wird, was dort zu einer Kanalumschaltung führt.

Empfängt nun eine Kommunikationsstation eine Anweisung, einen anderen als den gegenwärtig benutzten Funkkanal zu benutzen, so wechselt sie einfach den Funkkanal. In diesem Moment verliert sie zwar die Verbindung zu ihren elektronischen Anzeigen. Allerdings waren die betroffenen elektronischen Anzeigen zuvor bereits bei der Kommunikationsstation angemeldet bzw. registriert. Die betroffenen elektronischen Anzeigen scannen nun ihrerseits die zur Verfügung stehenden Funkkanäle, bis sie die betreffende Kommunikationsstation wieder finden, was unter Zuhilfenahme einer eindeutigen Kommunikationsstation-Kennung geschehen kann, und verbinden sich neuerlich mit ihr in diesem von der Kommunikationsstation nun benutzten Funkkanal. Sie werden also bei diesem Vorgang nicht neuerlich registriert. Vielmehr bleibt ihre Registrierung erhalten. Alternativ könnte vorgesehen sein, dass die Kommunikationsstation an die ihr zugeordneten elektronischen Anzeigen einen Befehl zum Wechseln des Funkkanals inklusive der Angabe des neuen Funkkanals aussendet, ggf. auch unter Bekanntgabe eines den Funkkanalwechsel zeitlich spezifizierenden Zeitpunkts oder einer Zeitspanne, bevor sie selbst den Funkkanal wechseln.

Als besonders vorteilhaft hat es sich erwiesen, wenn in zeitlicher Folge das Erfassen der Funk-Aktivität und das Übermitteln von dazu korrespondierenden Funkkanal-Aktivität-Daten wiederholt wird. Dies ermöglicht es auch die Definition des zu nutzenden Funkkanals durch die Datenverarbeitungseinrichtung quasi kontinuierlich, also auf wiederholte Weise im Laufe des Betriebs des elektronischen Anzeige-Systems durchzuführen. Somit kann das elektronische Anzeige-System auch im laufenden Betrieb auf veränderte bzw. sich verändernde funktechnische Rahmen- bzw. Umgebungsbedingungen eingehen und eine autonome, also automatische Funk-Kanalzuweisung durchführen.

Die Frage, wann und unter welchen Umständen ein Update der Funk-Kanalzuweisung durchzuführen ist, kann von verschiedenen Faktoren abhängen.

So kann beispielsweise automatisiert in regelmäßigen Abständen eine Erfassung der Funk-Aktivität im jeweiligen Funkkanal durchgeführt werden und geprüft werden, ob eine Veränderung in der Funk-Kanalbelegung nötig ist. Die Regelmäßigkeit kann sich beispielsweise auf jeden Zeitschlitzzyklus oder auch auf Vielfache des Zeitschlitzzyklus beziehen. Selbstverständlich kann auch eine andere zeitliche Beziehung wie zum Beispiel Minuten, Stunden, wie auch Tage, Teile von Tagen oder auch vielfache von Tagen usw. als zeitliche Basis für das regelmäßige Erfassen und prüfen, ob eine neue Funk-Kanalbelegung nötig ist, dienen. Dabei kann auch so vorgegangen werden, dass ab einer festgestellten nötigen Veränderung der Funk-Kanalbelegung in kürzeren Zeitabständen die Notwendigkeit einer weiteren Veränderung der Funk-Kanalbelegung geprüft wird, bis dass dies nicht mehr als notwendig erkannt wird, weil sich durch weitere Veränderungen prognostiziert keine Verbesserung der Empfangssituation ergibt. In weiterer Folge wird die Häufigkeit der Erfassung und Prüfung wieder in längeren Zeitabständen durchgeführt. Insbesondere durch die Veränderbarkeit der Zeitbasis lässt sich einerseits möglichst rasch eine nötige Veränderung der Funk-Kanalbelegung herbeiführen und andererseits, wenn kein Bedarf für weitere rasche Veränderungen vorliegt, ein energiesparender Betrieb der elektronischen Anzeigen sicherstellen.

Auslöser für eine neu zu definierende Funk-Kanalbelegung können verschiedenste Umstände sein, die eine Veränderung der Funk-Kanalzuweisung nötig machen. So kann beispielsweise der Ausbau einer Funkinfrastruktur in einem Geschäftslokal als Auslöser dafür dienen, weil plötzlich (durch weiderholtes automatisches Erfassen der Funk-Aktivität) festgestellt wird, dass einige elektronische Anzeigen oder auch Kommunikationsstationen in dem von ihnen benutzten Funkkanal nicht akzeptable Störsignale empfangen, worauf mit einer Optimierung, also Erneuerung der Funk-Kanalzuweisung im elektronischen Anzeige-System zu reagieren ist, sodass diese Störsignale nicht mehr auftreten oder zumindest minimiert sind. Auch kann eine Veränderung der Einrichtung, wie beispielsweise die Ergänzung, die Reduktion oder auch die örtliche Verstellung von Regalen, an denen elektronische Anzeigen befestigt sind, ein Auslöser für ein Update der Funk-Kanalzuweisung sein, weil auch in diesem Fall einige der elektronischen Anzeigen an ihren neuen Positionen eine veränderte Funk-Aktivität in dem durch sie benutzten Funkkanal feststellen können.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: Funkkanäle eines WLAN-Funksystems und eines ESL-Systems im 2,4 GHz-Band;
- Fig. 2: ein elektronisches Anzeige-System mit ESL-Accesspoints;
- Fig. 3: ein durch die ESL-Accesspoints bereitgestelltes proprietäres Zeitschlitzkommunikationsverfahren;
- Fig. 4: eine initiale erste Funk-Kanalzuweisung für die ESL-Accesspoints;
- Fig. 5: eine veränderte zweite Funk-Kanalzuweisung für die ESL-Accesspoints.

### Beschreibung der Ausführungsbeispiele

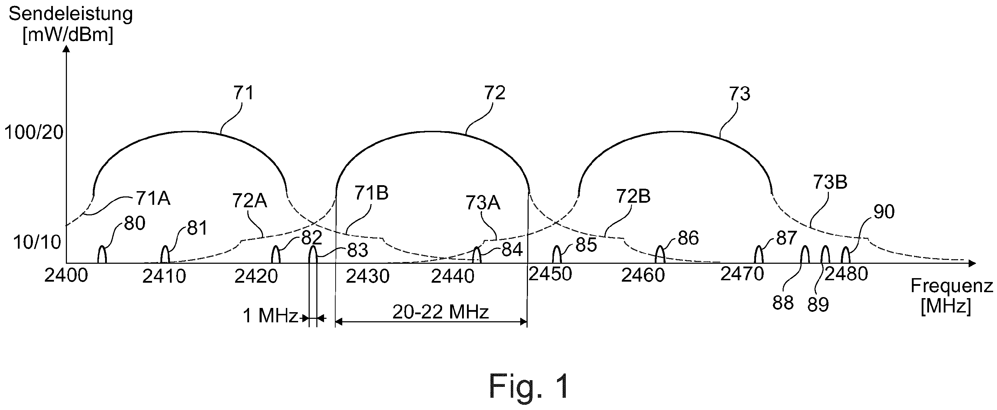

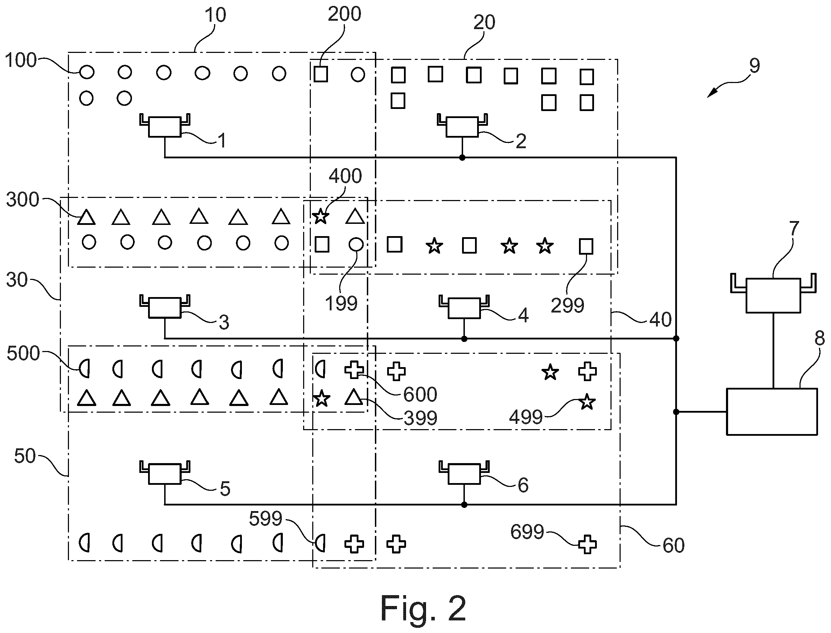

In der Figur 1 sind beispielhaft die im Zusammenhang mit einem elektronischen Anzeige-System 9 (nachfolgend kurz System 9 genannt), das schematisch in der Figur 2 dargestellt ist, zur Anwendung kommenden Funkkanäle im 2,4 GHz Frequenzband visualisiert. Die Figur 1 zeigt also entlang der Abszisse die Frequenzen von 2400 MHz bis 2480 MHz und entlang der Ordinate die Sendeleistung eines Funkgeräts bzw. dessen Funksignals im Bereich von 10 mW - 100 mW bzw. im Bereich 10 dBm bis 20 dBm.

In diesem Frequenzband ist einerseits der durch IEEE 802.11 empfohlene erste, sechste und elfte Wi-Fi-Funkkanal 71, 72 und 73 mit der typischen Bandbreite von 20-22 MHz eingetragen. Die verbleibenden Wi-Fi-Funkkanäle werden gemäß der Empfehlung IEEE 802.11 nicht verwendet und sind demnach nicht eingetragen. Zudem sind zu jedem der Wi-Fi-Funkkanäle 71 - 73 die jeweiligen oberen und unteren Seitenbänder 71A und 71B, 72A und 72B sowie 73A und 73B schematisch angedeutet.

Weiterhin sind in dem Frequenzband die für elektronische Anzeigen 100 - 699 (siehe Fig. 2) zur Verfügung stehenden Anzeige-Funkkanäle, nachfolgend kurz ESL-Funkkanäle, vom nullten bis zum zehnten ESL-Funkkanal 80-90 mit ihrer Bandbreite von 1 MHz eingetragen. Obwohl die bevorzugten ESL-Funkkanäle, nämlich der dritte 83, der fünf 85, der achte 88, der neunte 89 und der zehnte 90, außerhalb der Bandbreite der drei empfohlenen Wi-Fi-Funkkanäle 71, 72 und 73 liegen, ist aus der Figur 1 deutlich ersichtlich, dass bei einer ungünstigen örtlichen Konfiguration in dem System 9 Funksignale in den besagten bevorzugten ESL-Funkkanälen 83, 85, 88, 89 und 90 durch leistungsstarke Seitenband-Signale der empfohlenen Wi-Fi-Funkkanäle 71, 72 und 73 überdeckt werden. Diese Problematik wird durch die gegenständliche Erfindung gelöst, worauf nachfolgend im Detail eingegangen ist.

Im Folgenden ist mithilfe der Figur 2 eine beispielhafte Konfiguration des Systems 9 erörtert.

Die Figur 2 zeigt eine Datenverarbeitungseinrichtung 8, nachfolgend kurz Server 8 genannt, einen damit kabelgebunden verbundenen WLAN-Accesspoint 7, der die erwähnten empfohlenen drei Wi-Fi-Funkkanäle 71 - 73 benutzen kann, sechs Kommunikationsstationen 1 - 6, nachfolgend kurz ESL-Accesspoints 1 - 6 genannt, die ebenfalls mit dem Server 8 kabelgebunden verbunden sind.

Dem WLAN-Accesspoint 7 sei hier der erste Wi-Fi-Funkkanal 71 zugeordnet.

Bei der Installation des Systems 9 wurden die ESL-Access 1 - 6 der Reihe nach in Betrieb genommen, wobei von den jeweiligen ESL-Accesspoint 1 - 6 eine Prüfung der bevorzugten, also außerhalb der empfohlenen Wi-Fi-Funkkanäle gelegenen fünf ESL-Funkkanäle 83, 85, 88, 89 und 90 auf Belegung bzw. Nutzung durch einen anderen ESL-Accesspoint 1 - 6 durchgeführt wurde und der als erstes verfügbare (freie, also nicht durch einen anderen ESL-Accesspoint benutze) ESL-Funkkanal 83, 85, 88, 89 oder 90 für den eigenen Funkverkehr ausgewählt wurde. So wurde gemäß diesem Beispiel der dritte ESL-Funkkanal 83 durch den erste ESL-Accesspoint 1, der fünfte ESL-Funkkanal 85 durch den zweiten ESL-Accesspoint 2, der achte ESL-Funkkanal 88 durch den dritten ESL-Accesspoint 3, der neunte ESL-Funkkanal 89 durch den vierten ESL-Accesspoint 4, der zehnte ESL-Funkkanal 90 durch den fünften ESL-Accesspoint 5 und der dritte ESL-Funkkanal 83 durch den sechsten ESL-Accesspoint 6 belegt.

Weiterhin ist in der Figur 2 eine größere Anzahl von elektronischen Anzeigen, nachfolgend kurz ESL genannt, 100 - 199, 200 - 299, 300 - 399, 400 - 499, 500 - 599 und 600 - 699 dargestellt. Die ESLs 100 - 699 sind in Gruppen 10, 20 usw. bis 60 zusammengefasst und mit unterschiedlichen Symbolen (Kreis, Viereck, Dreieck, Stern, Halbkreis und Kreuz) gekennzeichnet, die im Wesentlichen um die Position der ESL-Accesspoints 1 - 6 herum geschart sind, wobei eine räumliche Überlappung der Gruppen 10 - 60 in den Randbereichen existieren kann, so wie dies in der Figur 2 ersichtlich ist. In diesem Beispiel sind der Einfachheit wegen pro Gruppe 10 - 60 immer einhundert Stück der ESLs vorgesehen, wobei die in der Praxis zur Anwendung kommende Anzahl der ESLs insbesondere von Gruppe zu Gruppe unterschiedlich sein kann und von dem hier verwendeten Wert selbstverständlich abweichen kann.

Die erste Gruppe 10 ist funktechnisch dem ersten ESL-Accesspoint 1 zugeordnet, die zweite Gruppe 20 ist funktechnisch dem zweiten ESL-Accesspoint 2 zugeordnet usw. bis hin zur sechsten Gruppe 60, die funktechnisch dem sechsten Accesspoint 6 zugeordnet ist. Diese funktechnische Zuordnung wurde im Zuge der Installation bzw. Inbetriebnahme des Systems 9 etabliert, wobei sich die jeweiligen ESLs 100 - 699 bei dem jeweiligen bestmöglich funktechnisch verfügbaren ESL-Accesspoint 1 - 6 angemeldet haben. Als Kriterium für die bestmögliche funktechnische Verfügbarkeit kann z.B. die Auswahl jenes bevorzugten ESL-Funkkanals 83, 85, 88, 89, 90 herangezogen werden, der das stärkste Funksignal aufweist.

Hier sei erwähnt, dass zwecks Visualisierung der Gruppen 10 - 60 ein mit unterbrochener Linie dargestelltes Viereck gewählt wurde. Dies dient jedoch nur der schematischen Darstellung. In einer realen Gruppierung würde üblicherweise eine dreidimensionale Verteilung der ESL 100 - 699 usw. um ihren jeweiligen ESL-Accesspoint 1- 6 herum vorliegen, worauf hier jedoch aus Gründen der Übersichtlichkeit verzichtet wurde.

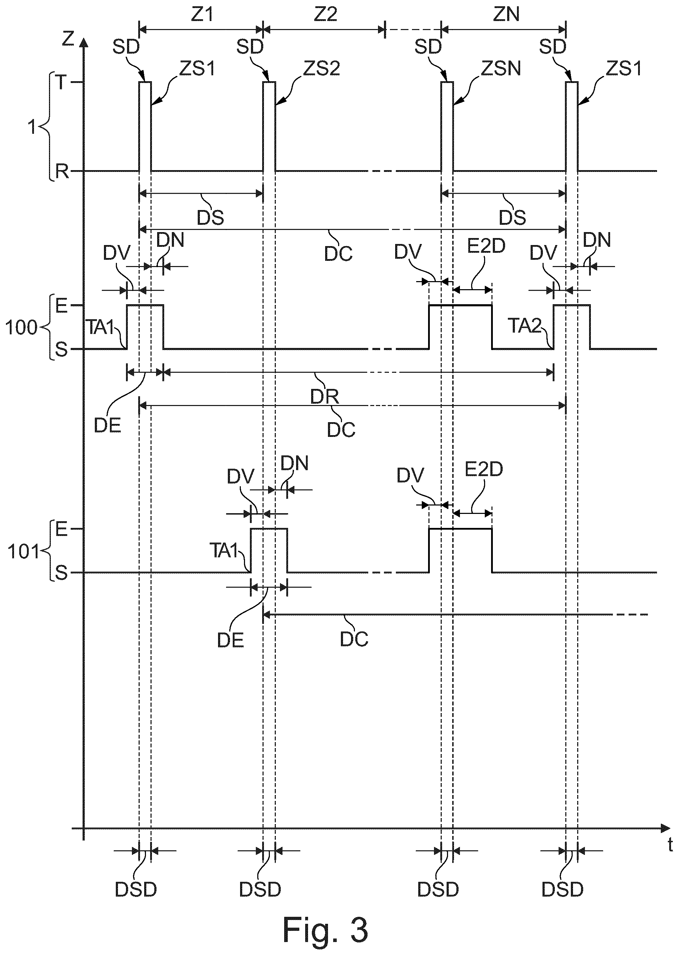

Die Kommunikation der ESL-Accesspoints 1- 6 mit den jeweils zugeordneten ESLs 100 - 699 erfolgt im vorliegenden Fall im Rahmen des in der allgemeinen Beschreibung bereits angesprochenen proprietären Zeitschlitzkommunikationsverfahrens, dessen Struktur und zeitliche Systematik in der Figur 3 visualisiert ist. Hier ist bespielhaft und aus Gründen der Übersichtlichkeit nur auf den ersten ESL-Accesspoint 1 und zwei seiner ESL 100 und 101 eingegangen.

In der Figur 3 zeigt die oberste Zustandsfolge die Zustände Z des ersten ESL-Accesspoints 1. Während einer Zeitschlitzzyklus-Dauer DC (z.B. 15 Sekunden) stehen N Zeitschlitze Z1 ... ZN (z.B. 256) mit identischer Zeitschlitzdauer DS (z.B. ca. 58 Millisekunden) zur Verfügung. Während der Zeitschlitzzyklus-Dauer DC wechselt der erste ESL-Accesspoint 1 zwischen einem Sendezustand T und einem Ruhezustand R. Der Sendezustand T wird immer zu Beginn eines Zeitschlitzes Z1 ... ZN eingenommen und für eine Synchronisations-Datensignal-Dauer DSD (oder Sendezeitdauer DSD des Synchronisations-Datensignals SD) aufrecht erhalten, um mit dem jeweiligen Synchronisations-Datensignal SD das jeweilige zutreffende Zeitschlitzsymbol ZS1, ZS2, ... ZSN zu senden. Als das jeweilige Zeitschlitzzyklussymbol ZS1 ...ZSN kommt hier beispielhaft die laufende Nummer des jeweiligen Zeitschlitzes Z1 ... ZN in der Reihenfolge des Auftretens der Zeitschlitz Z1 ... ZN zum Einsatz, um den jeweiligen Zeitschlitz eindeutig zu identifizieren. Folglich ist der erste Zeitschlitz Z1 in Hexadezimal-Notation (durch "Hex" gekennzeichnet) mit dem Zeitschlitzsymbol Hex 00, der zweite Zeitschlitz Z2 mit dem Zeitschlitzsymbol Hex 01 usw. und der letzte Zeitschlitz ZN (im vorliegenden Beispiel der zweihundertsechsundfünfzigste Zeitschlitz Z256 mit dem Zeitschlitzsymbol Hex FF gekennzeichnet.

Im vorliegenden Ausführungsbeispiel erfolgt mit Hilfe des niederwertigsten Bytes B0 der eindeutigen Hardware-Adresse des ESL 100 - 199 bei dem jeweiligen ESL 100 - 199 eine Identifikation eines im Rahmen des Zeitschlitzkommunikationsverfahrens auftretenden Zeitschlitzes, der für das jeweilige ESL 100 - 199 bestimmt ist. Mit Ausnahme des niederwertigsten Bytes B0 werden die verbleibenden drei Bytes B1 - B3 der Hardware-Adresse verwendet, um ein ESL 100 - 199 im für das jeweilige ESL 100 - 199 bestimmten Zeitschlitz Z1 ... ZN individuell zu adressieren, um beispielsweise Daten zu übertragen oder Befehle an das ESL 100 -199 zu übermitteln, die dann ausgeführt werden.

In der Fig. 3 ist dargestellt, dass sich das erste ESL 100 im synchroneren Zustand befindet. Es erwacht zu einem ersten Aufwachzeitpunkt TA1 aus seinem Schlaf-Zustand S und wechselt mit einer relativ kurzen Vorlaufzeit DV vor einem erwarteten Auftreten eines Synchronisations-Datensignals SD in seinen empfangsbereiten Aktiv-Zustand E, empfängt das Synchronisations-Datensignal SD während einer Empfangszeitdauer DE mit dem ersten Zeitschlitzsymbol ZS1 (Hex 00), stellt durch Vergleich des niederwertigsten Bytes B0 seiner Hardware-Adresse (Hex 00) mit dem empfangenen Zeitschlitzsymbol ZS1 fest, dass der für das erste ESL 100 bestimmte erste Zeitschlitz Z1 angezeigt ist (Übereinstimmung der zu vergleichenden Bytes: B0 der Hardware-Adresse und erstes Zeitschlitzsymbol ZS1), behält die zum Steuern des Aufwachens benutzen Parameter der Zeitsteuerstufe 33 für das Aufwachen im nachfolgenden Zeitschlitzzyklus zwecks Definition des neuen Aufwachzeitpunkts bei und wechselt mit einer relativ kurzen Nachlaufzeit DN zurück in den Schlaf-Zustand S, um nach Ablauf der vorgesehenen Schlaf-Zustand-Verweilzeit DR planmäßig zum neuen (zweiten) Aufwachzeitpunkt TA2 mit besagter Vorlaufzeit VD vor dem neuerlichen Beginn des ersten Zeitschlitzzyklus Z1 aufzuwachen. Gleiches gilt auf analoge Weise für das zweite ESL 101, das sich ebenso wie das erste ESL 100 im synchronen Zustand befindet.

Mit Hilfe dieser Systematik lassen sich die ESL 100 - 699 auf möglichst energieeffiziente Weise im synchronen Zustand halten und stehen innerhalb ihres jeweiligen Zeitschlitzes auch zur Kommunikation mit ihrem ESL-Accesspoint 1 - 6 zur Verfügung.

Weiterhin sind die ESLs 100 - 699 so programmiert, dass sie auch außerhalb ihres angestammten Zeitschlitzes aktiv sind, und zwar im letzten Zeitschlitz ZN, so wie dies für die beiden ESLs 100 und 101 in der Figur 3 dargestellt ist. Dort liegt jedoch nur der Empfangszustand vor.

Zeitgerecht zum Auftreten des letzten Synchronisations-Datensignals SD des letzten Zeitschlitzes ZN des Zeitschlitzzyklus erwachen im vorliegenden Fall alle dem ersten ESL-Accesspoint 1 zugeordneten ESL 100 - 199, empfangen dabei das letzte Zeitschlitzsymbol ZSN, identifizieren den letzten Zeitschlitz ZN auf Grundlage der laufenden Nummer, um ihren Synchronismus nochmals zu verifizierten, und prüfen innerhalb des letzten Zeitschlitzes ZN die Funk-Aktivität in den ESL-Funkkanälen null 80 - zehn 90 währen der Erfassungszeitdauer E2D, und speichern die erfasste Funkkanal-Aktivität in Form von Funkkanal-Aktivität-Daten FAD für eine später Übertragung an den ersten ESL-Accesspoint 1. Als die Erfassungszeitdauer E2D kann ein Teil der Zeitschlitzdauer DS oder auch die gesamte Zeitschlitzdauer DS (ggf. abzüglich der Vorlaufzeit DV) genutzt werden.

Die ESL-Accesspoints 1 - 6 sind bevorzugt so programmiert, dass nachfolgend an das Aussenden des Synchronisations-Datensignals SD des letzten Zeitschlitzes ZN keine weitere Aussendung erfolgt, also Funkstille im letzten Zeitschlitz ZN herrscht. Damit wird sichergestellt, dass keine selbstverursachte Signalaussendung die erfasste Funk-Aktivität verfälscht, die ja nur fremdverursachte Funk-Aktivitäten anzeigen soll.

Um eine möglichst vollständige Erfassung der Funk-Aktivität in den ESL-Funkkanälen 80 - 90 sicherzustellen, kann sich der Vorgang der Erfassung für verschiedene ESL-Funkkanäle 80 - 90 über mehrere Zeitschlitzzyklen hinweg erstrecken, wobei für jeden Zeitschlitzzyklus z.B. nur ein einziger oder eine geringe Anzahl der ESL-Funkkanäle 80 - 90 auf Funk-Aktivität geprüft wird. Insbesondere wird der Vorgang der Erfassung immer wieder (z.B. alle M Zeitschlitzzyklen, wobei M eine natürliche Zahl ist, wie z.B. alle 5, 10 oder 50 Zeitschlitzzyklen) wiederholt, um für alle zur Verfügung stehenden ESL-Funkkanäle 80 - 90 fortlaufend ein aktuelles Gesamtbild der Funk-Aktivität zu etablieren. Der zeitliche Verlauf, in der die Funk-Aktivität für alle ESL-Funkkanäle 80 - 90 erfasst wird, wird nachfolgend Erfassungsperiode benannt.

Da sowohl die ESL-Accesspoints 1 - 6 wie auch die ESLs 100 - 699 über die zeitlichen Verhältnisse oder in anderen Worten insbesondere über das Timing dieser Erfassungsperiode Bescheid wissen, können die individuell an der Position der ESLs 100 - 699 erfassten Funk-Aktivitäten im jeweiligen ESL-Funkkanal 80 - 90 nach Ablauf der Erfassungsperiode durch die ESL-Accesspoints 1- 6 von den ihnen jeweils zugeordneten ESL 100 - 199 bis 600 - 699 aktiv abgerufen werden, z.B. durch einen Befehl. Dies führt dann zu einer Datenübertragung vom jeweiligen ESL 100 - 699 zu dem entsprechenden ESL-Accesspoint 1 - 6, wobei die Datenübertragung je nach Datenmenge entweder im Zeitschlitz Z1 - ZN, dem das betreffende ESL 100 - 699 zugeordnet ist, oder in einer Zeitschlitze Z1 - ZN übergreifenden Datenüberragung erfolgen kann. Dabei kann die gesamte zu übertragende Datenmenge auf verschieden Zeitschlitze Z1 - ZN aufgeteilt werden, ggf. auch verteilt über mehrere Zeitschlitzzyklen übermittelt werden.

Im Fall der Figur 3 könnten die Funkkanal-Aktivität-Daten FAD z.B. für das erste ESL 100 im ersten Zeitschlitz Z1 und für das zweite ESL 101 im zweiten Zeitschlitz Z2 übertragen werden, was jedoch nicht im Detail dargestellt ist. Dafür würde das jeweilige ESL 100 bzw. 101 individuell mit Hilfe des Synchronisations-Datensignals SD adressiert und durch einen von dem ersten ESL-Accesspoint 1 empfangenen Abfragebefehl zur Datenübermittlung aufgefordert werden. Gleiches gilt analog für alle anderen ESL-Accesspoints 2 - 6 und alle anderen ESLs 102 - 699.

Die per Funk an die ESL-Accesspoints 1 - 6 übertragenen Funkkanal-Aktivität-Daten FAD werden dann von den ESL-Accesspoints 1 - 6 an den Server 8 überragen und dort mit Bezug zu der jeweiligen Position des betreffenden ESLs 100 - 699 gespeichert, so dass eine digitale dreidimensionale Karte der Funk-Aktivitäten für jeden ESL-Funkkanal entsteht. Hierbei sei erwähnt, dass der Server 8 eine Information betreffend die Position von Produkten im Geschäftslokal speichert, zu denen die einzelnen ESL 100 - 699 korrespondieren, woraus sich auch die ungefähre Position der ESL 100 - 699 definieren lässt.

Auf Grundlage dieser Abbildung der Funk-Aktivitäten erfolgt bei dem Server eine Optimierung der Funk-Kanalzuweisung für jeden ESL-Accesspoint 1- 6, wobei darauf geachtet wird, dass die jeweilige Gruppe 10 - 60 der ESLs 100 - 699 so gut wie möglich mit dem jeweiligen ESL-Accesspoint 1 - 6 funken kann, also dass die Funksignale der ESLs 100 - 699 mit möglichst hoher Signalstärke, insbesondere ohne Überlagerung durch andere Funksignale, bei dem betreffenden ESL-Accesspoint 1 - 6 empfangbar sind. Es wird also für jeden ESL-Accesspoint 1 - 6 der zukünftig zu nutzende ESL-Funkkanal null 80 - zehn 90, insbesondere beschränkt auf die bevorzugt zu nutzenden ESL-Funkkanäle drei, fünf, acht, neun oder zehn, definiert und dann in Form von Funkkanal-Definitionsdaten an den jeweiligen ESL-Accesspoint 1 - 6 kabelgebunden übertragen.

Bei den ESL-Accesspoints 1 - 6 werden die Funkkanal-Definitionsdaten empfangen und, soweit eine Kanalumschaltung nötig ist, auf den neu definierten ESL-Funkkanal 80 - 90 umgeschaltet. Die ESLs 100 - 699 des betreffenden ESL-Accesspoints 1 - 6 folgen dieser neuen Funkkanal-Zuweisung, also der Veränderung des ESL-Funkkanals 80 - 90, automatisch, weil sie die Verbindung zu ihrem ESL-Accesspoint 1 - 6 verlieren und diesen in einer eigenen Suchsequenz durch die ESL-Funkkanäle 80 - 90 wieder finden und sich neuerlich mit ihm verbinden bzw. wieder synchronisieren.

Damit ergibt sich eine in Bezug auf die Orte der ESLs 100 - 699 optimierte örtliche Verteilung der Nutzung der ESL-Funkkanäle 80 - 90 im System 9. Diese kann in gewissen Zeitabständen, insbesondere in im Wesentlichen periodischen Zeitabständen, wiederholt werden, wodurch sich im Laufe der Betriebszeit des Systems eine an die jeweiligen funktechnischen Rahmenbedingungen (Störsignal durch andere Funkeinrichtungen, funktechnische Abschattungen usw., wie auch veränderte örtliche Lokalisation der ESLs 100 - 699, usw.) angepasste Funk-Kanalzuweisung ergibt, die einen zuverlässigen Funkverkehr zwischen den ESLs 100 - 699 und ihrem jeweiligen ESL-Accesspoint 1 - 6 sicherstellt.

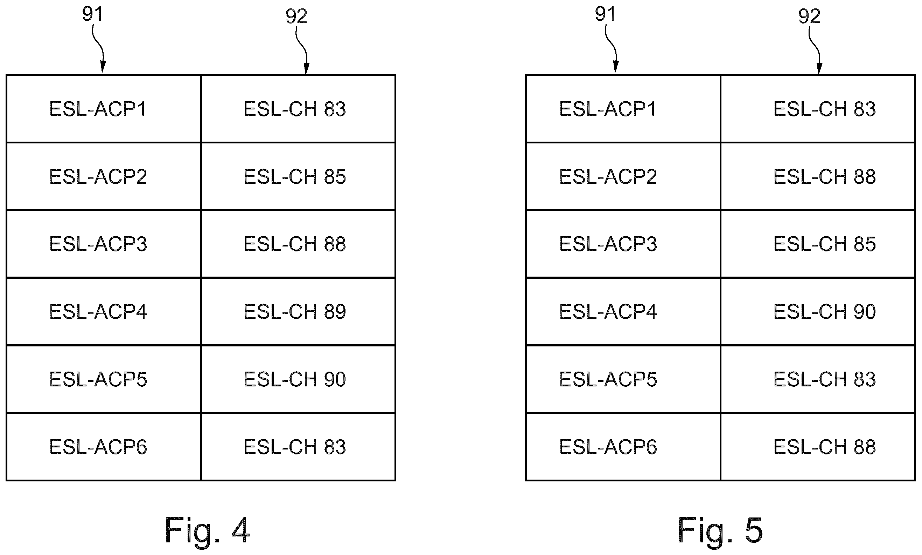

In der Figur 4 ist jene Funk-Kanalzuweisung in tabellarischer Form zusammengefasst, die vor dem Optimierungsprozess vorlag, und in der Figur 5 ist die optimierte Funk-Kanalzuweisung wiedergegeben. In diesen Tabellen sind in einer ersten Spalte 91 die ESL-Accesspoints 1 - 6 gelistet, die dort als ESL-ACP in Kombination mit ihrem jeweiligen Bezugszeichen 1 - 6 abgekürzt sind, und in einer zweiten Spalte 92 ist der von dem jeweiligen ESL-Accesspoint 1 - 6 belegte ESL-Funkkanal 80 - 90 angeführt, der dort als ESL-CH in Kombination mit dem jeweiligen Bezugszechen 80 - 90 abgekürzt ist.

Wie deutlich zu sehen ist, waren in der ursprünglichen Funk-Kanalbelegung die Nutzung von unmittelbar benachbarten ESL-Funkkanälen 88, 89 und 90 durch den zweiten, den dritten und den vierten ESL-Accesspoint 3, 4 und 5 eher nachteilig und auch die Nähe des durch den sechsten ESL-Accesspoint 6 genutzten dritten ESL-Funkkanal 83 zum ersten Wi-Fi-Funkkanal 71, der ja durch den WLAN-Accesspoint 7 genutzt wird, äußerst ungünstig. Diese ungünstigen Verhältnisse wurden durch die Optimierung der Funk-Kanalzuweisung dahingehend beseitigt, dass die in unmittelbarer örtlicher Nähe zum WLAN-Accesspoint 7 positionierten ESL-Accesspoints 2, 4, 6 nun den achten bzw. den zehnten ESL-Funkkanal 88 bzw. 90 verwenden und somit einerseits nicht in unmittelbar benachbarten ESL-Funkkanälen betrieben werden, wobei andererseits auch ein möglichst großer Frequenzabstand zu dem oberen Seitenband 71B des ersten WLAN-Funkkanals 71 vorliegt. Die örtlich weiter weg von dem WLAN-Accesspoint 7 lokalisierten ESL-Accesspoints 1, 3 und 5 verwenden nun die ESL-Funkkanäle 83, 85 und 83, weil an ihrer Position bzw. an der Position der zugeordneten ESLs 100 - 199, 300 - 399 und 500 - 599 das obere Seitenband 71B keinen negativen Einfluss mehr hat. Weiterhin wurde sichergestellt, dass keine unmittelbar benachbarten ESL-Funkkanäle zum Einsatz kommen, insbesondere im Vergleich zu den anderen ESL-Accesspoints 2, 4 und 6. In diesem Beispiel wäre es allerdings auch möglich, dass der ESL-Accesspoint 5 nicht den bereits durch den ESL-Accesspoint 1 benutzen ESL-Funkkanal 83 verwendet, sondern einen der nicht bevorzugten ESL-Funkkanäle, wie z.B. den im Bereich des oberen Endes des Frequenzbands lokalisierten ESL-Funkkanal 87.

Auch kann bei dem System 9 vorgesehen sein, dass die Funk-Kanalzuweisung zweistufig abläuft. So kann beispielsweise in einem ersten Schritt mit Hilfe der ESL-Accesspoints 1 - 6 die Funk-Aktivität für die ESL-Funkkanäle 80 - 90 erfasst und an den Server 8 übertragen werden, wonach eine neue Zuweisung der zukünftig zu nutzenden ESL-Funkkanäle 80 - 90 für die ESL-Accesspoints 1 - 6 definiert wird und an diese übertagen wird, so dass die ESL-Accesspoints 1 - 6 ggf. die Belegung der durch sie genutzten ESL-Funkkanäle 80 - 90 verändern. Danach kann in einem zweiten Schritt die Funk-Aktivität in den ESL-Funkkanälen 80 - 90 am Ort der individuellen ESLs 100 - 699 erfasst und über die ESL-Accesspoints 1 - 6 an den Server 8 übertragen werden und die Zuweisung der Funkkanäle zu den ESL-Accesspoints 1 - 6 weiter verändert werden, um ein Fine-Tuning der Funk-Kanalzuweisung zu erhalten.

Weiterhin kann bei dem System auch eine kombinierte Berücksichtigung der erfassten Funk-Aktivität am Ort des jeweiligen ESL-Accesspoints 1 - 6 wie auch am Ort des jeweiligen ESLs 100 - 699 erfolgen. Hierfür wird die Funk-Aktivität sowohl durch die ESL-Accesspoints 1 - 6 an ihrem jeweiligen Ort wie auch durch die ESL 100 - 699 an ihrem jeweiligen Ort erfasst und an den Server 8 übermittelt, der dann unter Berücksichtigung all dieser Funk-Aktivitäten eine örtliche Optimierung der Zuweisung der Kanalbelegung für die ESL-Accesspoints 1 - 6 ermittelt.

Als besonders vorteilhaft hat es sich erwiesen, wenn in dem System 9 nicht der separate WLAN-Accesspoint 7 zum Einsatz kommt, sondern zumindest eine Kombination-Kommunikationsstation (nicht dargestellt) eingesetzt wird, die einen ESL-Accesspoint wie auch einen WLAN-Accesspoint in einem Gerät kombiniert, wobei eine Software-Schnittstelle zwischen den beiden die Funktionalität des jeweiligen Accesspoint-Typs realisierenden Software-Treibern existiert. Über die Software-Schnittstelle lässt sich dann der WLAN-Funkkanal, der durch den WLAN-Accesspoint genutzt wird, direkt anfragen bzw. erfassen und in weiterer Folge auch, soweit dies nötig ist, nach erfolgter Optimierung der Funk-Kanalzuweisung nicht nur der ESL-Funkkanal in der Kombination-Kommunikationsstation verändern, sondern auch der durch den integrierten WLAN-Accesspoint verwendete WLAN-Funkkanal verändern.

Zusammengefast führen diese Maßnahmen zu einem System 9, bei dem sich die Funk-Kanalzuweisung für die ESL-Accesspoints, ggf. auch für damit in einem Gerät kombinierte WLAN-Accesspoints, auch während des Betriebs, also nach erstmaliger Funkkanalbelegung, verändern lässt und auch quasi-kontinuierlich weiter verändert werden kann, um die Funkverbindung mit den üblicherweise leistungsschwachen ESLs 100 - 699 sicherzustellen oder in Folge auch zu verbessern bzw. zu optimieren.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

Offenbart werden insbesondere die folgenden Ausführungsformen:
Ausführungsform 1. Verfahren zur Funk-Kanalzuweisung in einem System (9) elektronischer Anzeigen (100 - 699),
   wobei das System (9) eine Datenverarbeitungseinrichtung (8), Kommunikationsstationen (1 - 6) und elektronische Anzeigen (100 - 699) aufweist und jede Kommunikationsstation (1 - 6) zur Nutzung eines durch die Datenverarbeitungseinrichtung (8) definierten Funkkanals (80 - 90) für eine Funkkommunikation mit ihr zugeordneten elektronischen Anzeigen (100 - 699) ausgebildet ist,
   wobei das Verfahren die folgenden Verfahrensschritte aufweist, nämlich:
      Definieren des zu nutzenden Funkkanals auf Grundlage von durch die Kommunikationsstation (1 - 6) an die Datenverarbeitungseinrichtung (8) übermittelter Funkkanal-Aktivität-Daten, welche eine erfasste Funk-Aktivität im jeweiligen Funkkanal (80 - 90) beschreiben,
      dadurch gegenzeichnet, dass
      die Übermittlung der Funkkanal-Aktivität-Daten durch die Kommunikationsstation (1 - 6) zu einem Zeitpunkt erfolgt, nachdem die jeweilige Kommunikationsstation (1 - 6) durch Nutzung eines Funkkanals einen erstmaligen Verbindungsaufbau mit zumindest einer der elektronischen Anzeigen (100 - 699) durchgeführt hat, wobei die Funkkanal-Aktivität-Daten eine erfasste Funk-Aktivität nach besagtem erstmaligem Verbindungsaufbau beschreiben.
Ausführungsform 2. Verfahren nach Ausführungsform 1, wobei
   das Erfassen der Funk-Aktivität in einem Funkkanal (80 - 90) mit Hilfe der Kommunikationsstation (1 - 6) am Ort der jeweiligen Kommunikationsstation (1 - 6) erfolgt.
Ausführungsform 3. Verfahren nach Ausführungsform 2, wobei die Kommunikationsstation (1 - 6) einen Funkkanal selektiert und in diesem Funkkanal Funksignale empfängt, um die Funk-Aktivität zu erfassen.
Ausführungsform 4. Verfahren nach Ausführungsform 2 oder 3, wobei die Kommunikationsstation (1 - 6) ein erstes Funk-Kommunikationsmodul zur Funkkommunikation gemäß einem ersten Kommunikationsprotokoll mit den elektronischen Anzeigen (100 - 699) aufweist und ein zweites Funk-Kommunikationsmodul zur Funkkommunikation gemäß einem von dem ersten Kommunikationsprotokoll unterschiedlichen zweiten Kommunikationsprotokoll zur Funkkommunikation mit anderen Geräten als den elektronischen Anzeigen (100 - 699) aufweist, wobei das Erfassen der Funk-Aktivität bei dem ersten Funk-Kommunikationsmodul durch ein Abfragen der Funkkanalnutzung über eine Hard- und/oder Software-Schnittstelle von dem zweiten Funk-Kommunikationsmodul erfolgt.
Ausführungsform 5. Verfahren nach Ausführungsform 4, wobei die Datenverarbeitungseinrichtung (8) sowohl einen durch das erste Funk-Kommunikationsmodul zu nutzenden ersten Funkkanal (80 - 90) als auch einen durch das zweite Funk-Kommunikationsmodul zu nutzenden zweiten Funkkanal (71 - 73), der mit dem ersten Funkkanal (80 - 90) im Wesentlichen nicht überlappt, definiert.
Ausführungsform 6. Verfahren nach Ausführungsform 1, wobei
   das Erfassen einer Funk-Aktivität in einem Funkkanal (80 - 90) mit Hilfe einer elektronischen Anzeige (100 - 699) am Ort der jeweiligen elektronischen Anzeige (100 - 699) erfolgt und
   die am Ort der jeweiligen elektronischen Anzeige (100 - 699) vorliegende Funk-Aktivität als Funkkanal-Aktivität-Daten zusammen mit einer die jeweilige elektronische Anzeige (100 - 699) identifizierenden Anzeige-Kennung über die Kommunikationsstation (1 - 6), welcher die betreffende elektronische Anzeige (100 - 699) zugeordnet ist, an die Datenverarbeitungseinrichtung (8) übermittelt wird.
Ausführungsform 7. Verfahren nach Ausführungsform 6, wobei die Funkkommunikation zwischen einer der Kommunikationsstationen (1 - 6) und der ihr zugeordneten elektronischen Anzeigen (100 - 699) gemäß einem Zeitschlitzkommunikationsverfahren erfolgt, bei dem in sich wiederholender Folge eine Anzahl von Zeitschlitzen (Z1 - ZN) pro Zeitschlitzzyklus, insbesondere eine fixe Anzahl, zur Kommunikation zwischen der Kommunikationsstation (1 - 6) und den ihr zugeordneten elektronischen Anzeigen (100 - 699) bereitstehen und jeder Zeitschlitz (Z1 - ZN) durch ein eindeutiges Zeitschlitzsymbol (ZS1 - ZSN) gekennzeichnet ist, wobei jeder elektronischen Anzeige (100 - 699) durch Nutzung des Zeitschlitzsymbols (ZS1 - ZSN) genau ein Zeitschlitz (Z1 - ZN) zugordnet ist, um einen Synchronismus mit der Kommunikationsstation (100 - 699) autonom festzustellen und gegebenenfalls mit der Kommunikationsstation (1 - 6) zu kommunizieren, wobei das Erfassen einer Funk-Aktivität in einem Funkkanal (80 - 90) mit Hilfe einer elektronischen Anzeige (100 - 699) während eines Zeitschlitzes (Z1 - ZN) erfolgt.
Ausführungsform 8. Verfahren nach Ausführungsform 7, wobei das Erfassen einer Funk-Aktivität in einem Funkkanal (80 - 90) mit Hilfe einer elektronischen Anzeige (100 - 699) in einem Zeitschlitz (Z1 - ZN) erfolgt, der hinsichtlich einer Kommunikation zwischen der Kommunikationsstation (1 - 6) und den ihr zugeordneten elektronischen Anzeigen (100 - 699), zu denen auch die das Erfassen der Funk-Aktivität durchführende elektronische Anzeige (100 - 699) gehört, unbenutzt ist.
Ausführungsform 9. Verfahren nach Ausführungsform 7, wobei das Erfassen einer Funk-Aktivität in einem Funkkanal (80 - 90) mit Hilfe einer elektronischen Anzeige (100 - 699) in einem vordefinierten Zeitschlitz (Z1 - ZN), insbesondere dem letzten Zeitschlitz (ZN), des Zeitschlitzzyklus erfolgt.
Ausführungsform 10. Verfahren nach einer der Ausführungsformen 7 bis 9, wobei die bei der betreffenden elektronischen Anzeige (100 - 699) erfasste Funk-Aktivität für einen oder mehrere unterschiedliche, bevorzugt vordefinierte, Kanäle (80 - 90) mit Hilfe der Funkkanal-Aktivität-Daten gespeichert wird.
Ausführungsform 11. Verfahren nach Ausführungsform 10, wobei die bei der betreffenden elektronischen Anzeige (100 - 699) gespeicherten Funkkanal-Aktivität-Daten in jenem der elektronischen Anzeige (100 - 699) zugeordneten Zeitschlitz (Z1 - ZN) an die Kommunikationsstation (100 - 699) übertragen wird.
Ausführungsform 12. Verfahren nach einer der vorangehenden Ausführungsformen, wobei das Erfassen der Funk-Aktivität einen Funk-Signalempfang und eine Bestimmung eines Received-Signal-Strength-Indicator (abgekürzt RSSI) umfasst.
Ausführungsform 13. Verfahren nach einer der vorangehenden Ausführungsformen, wobei
   das Definieren des durch die jeweilige Kommunikationsstation (1 - 6) für die Funkkommunikation mit den ihr zugeordneten elektronischen Anzeigen (100 - 699) zu nutzenden Funkkanals (80 - 90) durch die Datenverarbeitungsvorrichtung (8) derart erfolgt, dass andere Funkkanal-Aktivitäten als jene der jeweiligen Kommunikationsstation (1 - 6) oder der ihr zugeordneten elektronischen Anzeigen (100 - 699) in dem definierten Funkkanal (80 - 90) im Wesentlichen vernachlässigbar sind.
Ausführungsform 14. Verfahren nach einer der vorangehenden Ausführungsformen, wobei das Definieren des zu nutzenden Funkkanals ein Übermitteln von Funkkanal-Definitionsdaten, die bei der Kommunikationsstation (1 - 6) zur Einstellung des zu nutzenden Funkkanals verwendbar sind, an die Kommunikationsstation (1 - 6) umfasst.
Ausführungsform 15. Verfahren nach einer der vorangehenden Ausführungsformen, wobei in zeitlicher Folge das Erfassen der Funk-Aktivität und das Übermitteln von dazu korrespondierenden Funkkanal-Aktivität-Daten wiederholt wird.
Ausführungsform 16. Elektronisches Anzeige-System (9), das aufweist:
   - elektronische Anzeigen (100 - 699),
   - Kommunikationsstationen (1 - 6), wobei jede Kommunikationsstation (1 - 6) zur Nutzung eines definierten Funkkanals (80 - 90) für eine Funkkommunikation mit der Kommunikationsstation (1 - 6) zugeordneten elektronischen Anzeigen (100 - 699) ausgebildet ist, und
   - eine Datenverarbeitungseinrichtung (8), die zur Definition des durch die jeweilige Kommunikationsstation (1 - 6) zu nutzenden Funkkanals (80 - 90) auf Grundlage von durch die Kommunikationsstationen (1 - 6) an die Datenverarbeitungseinrichtung (8) übermittelten Funkkanal-Aktivität-Daten, welche eine Funk-Aktivität im jeweiligen Funkkanal beschreiben, ausgebildet ist,
   dadurch gegenzeichnet, dass
   die Kommunikationsstationen (1 - 6) zur Übermittlung der Funkkanal-Aktivität-Daten zu einem Zeitpunkt ausgebildet sind, nachdem die jeweilige Kommunikationsstation (1 - 6) durch Nutzung eines Funkkanals (80 - 90) einen erstmaligen Verbindungsaufbau mit zumindest einer der elektronischen Anzeigen (100 - 699) durchgeführt hat, wobei die Funkkanal-Aktivität-Daten eine erfasste Funk-Aktivität nach besagtem erstmaligen Verbindungsaufbau beschreiben.
Ausführungsform 17. Verwendung von Kommunikationsstationen (1 - 6) in einem elektronischen Anzeige-System (9), das elektronische Anzeigen (100 - 699) aufweist, zur Übermittlung von Funkkanal-Aktivität-Daten, welche eine Funk-Aktivität im jeweiligen Funkkanal (80 - 90) beschreiben, an eine Datenverarbeitungseinrichtung (8), die zur Definition des durch die jeweilige Kommunikationsstation (1 - 6) zu nutzenden Funkkanals (80 - 90) für eine Kommunikation mit ihr zugeordneten elektronischen Anzeigen (100 - 699) auf Grundlage der übermittelten Funkkanal-Aktivität-Daten ausgebildet ist,
   dadurch gekennzeichnet, dass
   die Kommunikationsstation (1- 6) zur Übermittlung der Funkkanal-Aktivität-Daten zu einem Zeitpunkt verwendet wird, nachdem die jeweilige Kommunikationsstation (1 - 6) durch Nutzung eines Funkkanals (80 - 90) einen erstmaligen Verbindungsaufbau mit zumindest einer der elektronischen Anzeigen (100 - 699) durchgeführt hat, wobei die Funkkanal-Aktivität-Daten eine erfasste Funk-Aktivität nach besagtem erstmaligen Verbindungsaufbau beschreiben.

## Patentansprüche

1. Verfahren zur Funk-Kanalzuweisung in einem System (9) elektronischer Anzeigen (100 - 699),
wobei das System (9) eine Datenverarbeitungseinrichtung (8), Kommunikationsstationen (1 - 6) und elektronische Anzeigen (100 - 699) aufweist und jede Kommunikationsstation (1 - 6) zur Nutzung eines durch die Datenverarbeitungseinrichtung (8) definierten Funkkanals (80 - 90) für eine Funkkommunikation mit ihr zugeordneten elektronischen Anzeigen (100 - 699) ausgebildet ist,
wobei das Verfahren die folgenden Verfahrensschritte aufweist, nämlich:
Definieren des zu nutzenden Funkkanals auf Grundlage von durch die Kommunikationsstation (1 - 6) an die Datenverarbeitungseinrichtung (8) übermittelter Funkkanal-Aktivität-Daten, welche eine erfasste Funk-Aktivität im jeweiligen Funkkanal (80 - 90) beschreiben,
dadurch gegenzeichnet, dass
die Übermittlung der Funkkanal-Aktivität-Daten durch die Kommunikationsstation (1 - 6) zu einem Zeitpunkt erfolgt, nachdem die jeweilige Kommunikationsstation (1 - 6) durch Nutzung eines Funkkanals einen erstmaligen Verbindungsaufbau mit zumindest einer der elektronischen Anzeigen (100 - 699) durchgeführt hat, wobei die Funkkanal-Aktivität-Daten eine erfasste Funk-Aktivität nach besagtem erstmaligem Verbindungsaufbau beschreiben, und
dass das Erfassen einer Funk-Aktivität in einem Funkkanal (80 - 90) mit Hilfe einer elektronischen Anzeige (100 - 699) am Ort der jeweiligen elektronischen Anzeige (100 - 699) erfolgt und die am Ort der jeweiligen elektronischen Anzeige (100 - 699) vorliegende Funk-Aktivität als Funkkanal-Aktivität-Daten zusammen mit einer die jeweilige elektronische Anzeige (100 - 699) identifizierenden Anzeige-Kennung über die Kommunikationsstation (1 - 6), welcher die betreffende elektronische Anzeige (100 - 699) zugeordnet ist, an die Datenverarbeitungseinrichtung (8) übermittelt wird.

2. Verfahren nach Anspruch 1, wobei die Funkkommunikation zwischen einer der Kommunikationsstationen (1 - 6) und der ihr zugeordneten elektronischen Anzeigen (100 - 699) gemäß einem Zeitschlitzkommunikationsverfahren erfolgt, bei dem in sich wiederholender Folge eine Anzahl von Zeitschlitzen (Z1 - ZN) pro Zeitschlitzzyklus, insbesondere eine fixe Anzahl, zur Kommunikation zwischen der Kommunikationsstation (1 - 6) und den ihr zugeordneten elektronischen Anzeigen (100 - 699) bereitstehen und jeder Zeitschlitz (Z1 - ZN) durch ein eindeutiges Zeitschlitzsymbol (ZS1 - ZSN) gekennzeichnet ist, wobei jeder elektronischen Anzeige (100 - 699) durch Nutzung des Zeitschlitzsymbols (ZS1 - ZSN) genau ein Zeitschlitz (Z1 - ZN) zugordnet ist, um einen Synchronismus mit der Kommunikationsstation (100 - 699) autonom festzustellen und gegebenenfalls mit der Kommunikationsstation (1 - 6) zu kommunizieren, wobei das Erfassen einer Funk-Aktivität in einem Funkkanal (80 - 90) mit Hilfe einer elektronischen Anzeige (100 - 699) während eines Zeitschlitzes (Z1 - ZN) erfolgt.

3. Verfahren nach Anspruch 2, wobei das Erfassen einer Funk-Aktivität in einem Funkkanal (80 - 90) mit Hilfe einer elektronischen Anzeige (100 - 699) in einem Zeitschlitz (Z1 - ZN) erfolgt, der hinsichtlich einer Kommunikation zwischen der Kommunikationsstation (1 - 6) und den ihr zugeordneten elektronischen Anzeigen (100 - 699), zu denen auch die das Erfassen der Funk-Aktivität durchführende elektronische Anzeige (100 - 699) gehört, unbenutzt ist.

4. Verfahren nach Anspruch 2, wobei das Erfassen einer Funk-Aktivität in einem Funkkanal (80 - 90) mit Hilfe einer elektronischen Anzeige (100 - 699) in einem vordefinierten Zeitschlitz (Z1 - ZN), insbesondere dem letzten Zeitschlitz (ZN), des Zeitschlitzzyklus erfolgt.

5. Verfahren nach einem der Ansprüche 2 bis 4, wobei die bei der betreffenden elektronischen Anzeige (100 - 699) erfasste Funk-Aktivität für einen oder mehrere unterschiedliche, bevorzugt vordefinierte, Kanäle (80 - 90) mit Hilfe der Funkkanal-Aktivität-Daten gespeichert wird.

6. Verfahren nach Anspruch 5, wobei die bei der betreffenden elektronischen Anzeige (100 - 699) gespeicherten Funkkanal-Aktivität-Daten in jenem der elektronischen Anzeige (100 - 699) zugeordneten Zeitschlitz (Z1 - ZN) an die Kommunikationsstation (100 - 699) übertragen wird.

7. Verfahren nach einem der vorangehenden Ansprüche, wobei das Erfassen der Funk-Aktivität einen Funk-Signalempfang und eine Bestimmung eines Received-Signal-Strength-Indicator (abgekürzt RSSI) umfasst.

8. Verfahren nach einem der vorangehenden Ansprüche, wobei das Definieren des durch die jeweilige Kommunikationsstation (1 - 6) für die Funkkommunikation mit den ihr zugeordneten elektronischen Anzeigen (100 - 699) zu nutzenden Funkkanals (80 - 90) durch die Datenverarbeitungsvorrichtung (8) derart erfolgt, dass andere Funkkanal-Aktivitäten als jene der jeweiligen Kommunikationsstation (1 - 6) oder der ihr zugeordneten elektronischen Anzeigen (100 - 699) in dem definierten Funkkanal (80 - 90) im Wesentlichen vernachlässigbar sind.

9. Verfahren nach einem der vorangehenden Ansprüche, wobei das Definieren des zu nutzenden Funkkanals ein Übermitteln von Funkkanal-Definitionsdaten, die bei der Kommunikationsstation (1 - 6) zur Einstellung des zu nutzenden Funkkanals verwendbar sind, an die Kommunikationsstation (1 - 6) umfasst.

10. Verfahren nach einem der vorangehenden Ansprüche, wobei in zeitlicher Folge das Erfassen der Funk-Aktivität und das Übermitteln von dazu korrespondierenden Funkkanal-Aktivität-Daten wiederholt wird.

11. Elektronisches Anzeige-System (9), das aufweist:
- elektronische Anzeigen (100 - 699),
- Kommunikationsstationen (1 - 6), wobei jede Kommunikationsstation (1 - 6) zur Nutzung eines definierten Funkkanals (80 - 90) für eine Funkkommunikation mit der Kommunikationsstation (1 - 6) zugeordneten elektronischen Anzeigen (100 - 699) ausgebildet ist, und
- eine Datenverarbeitungseinrichtung (8), die zur Definition des durch die jeweilige Kommunikationsstation (1 - 6) zu nutzenden Funkkanals (80 - 90) auf Grundlage von durch die Kommunikationsstationen (1 - 6) an die Datenverarbeitungseinrichtung (8) übermittelten Funkkanal-Aktivität-Daten, welche eine Funk-Aktivität im jeweiligen Funkkanal beschreiben, ausgebildet ist,
dadurch gegenzeichnet, dass
die elektronische Anzeigen (100 - 699) so ausgebildet sind, dass das Erfassen einer Funk-Aktivität in einem Funkkanal (80 - 90) am Ort der jeweiligen elektronischen Anzeige (100 - 699) erfolgt,
dass die Kommunikationsstationen (1 - 6) zur Übermittlung der Funkkanal-Aktivität-Daten zu einem Zeitpunkt ausgebildet sind, nachdem die jeweilige Kommunikationsstation (1 - 6) durch Nutzung eines Funkkanals (80 - 90) einen erstmaligen Verbindungsaufbau mit zumindest einer der elektronischen Anzeigen (100 - 699) durchgeführt hat, wobei die Funkkanal-Aktivität-Daten eine erfasste Funk-Aktivität nach besagtem erstmaligen Verbindungsaufbau beschreiben, und
dass die Kommunikationsstationen (1 - 6) weiters ausgebildet sind, die am Ort der jeweiligen elektronischen Anzeige (100 - 699) vorliegende Funk-Aktivität als Funkkanal-Aktivität-Daten zusammen mit einer die jeweilige elektronische Anzeige (100 - 699) identifizierenden Anzeige-Kennung über die Kommunikationsstation (1 - 6), welcher die betreffende elektronische Anzeige (100 - 699) zugeordnet ist, an die Datenverarbeitungseinrichtung (8) zu übermitteln.

12. Verwendung von Kommunikationsstationen (1 - 6) in einem elektronischen Anzeige-System (9), das elektronische Anzeigen (100 - 699) aufweist, zur Übermittlung von Funkkanal-Aktivität-Daten, welche eine Funk-Aktivität im jeweiligen Funkkanal (80 - 90) beschreiben, an eine Datenverarbeitungseinrichtung (8), die zur Definition des durch die jeweilige Kommunikationsstation (1 - 6) zu nutzenden Funkkanals (80 - 90) für eine Kommunikation mit ihr zugeordneten elektronischen Anzeigen (100 - 699) auf Grundlage der übermittelten Funkkanal-Aktivität-Daten ausgebildet ist,
**dadurch gekennzeichnet, dass**
die Kommunikationsstation (1 - 6) zur Übermittlung der Funkkanal-Aktivität-Daten zu einem Zeitpunkt verwendet wird, nachdem die jeweilige Kommunikationsstation (1 - 6) durch Nutzung eines Funkkanals (80 - 90) einen erstmaligen Verbindungsaufbau mit zumindest einer der elektronischen Anzeigen (100 - 699) durchgeführt hat, wobei die Funkkanal-Aktivität-Daten eine erfasste Funk-Aktivität nach besagtem erstmaligen Verbindungsaufbau beschreiben, und
dass das Erfassen einer Funk-Aktivität in einem Funkkanal (80 - 90) mit Hilfe einer elektronischen Anzeige (100 - 699) am Ort der jeweiligen elektronischen Anzeige (100 - 699) erfolgt und die am Ort der jeweiligen elektronischen Anzeige (100 - 699) vorliegende Funk-Aktivität als Funkkanal-Aktivität-Daten zusammen mit einer die jeweilige elektronische Anzeige (100 - 699) identifizierenden Anzeige-Kennung über die Kommunikationsstation (1 - 6), welcher die betreffende elektronische Anzeige (100 - 699) zugeordnet ist, an die Datenverarbeitungseinrichtung (8) übermittelt wird.
